# EUROPEAN PATENT SPECIFICATION

(11) **EP 2 196 009 B1**
(45) Date of publication and mention of the grant of the patent: **22.02.2012**
(21) Application number: 08830136.1
(22) Date of filing: 12.09.2008
(51) Int. Cl.: H04M 1/725, G06F 1/16, H04M 1/02

(54) **RECEIVING BROADCAST SIGNALS USING INTELLIGENT COVERS FOR MOBILE DEVICES**
EMPFANGEN VON AUSSTRAHLUNGSSIGNALEN UNTER VERWENDUNG INTELLIGENTER ABDECKUNGEN FÜR MOBILGERÄTE
RÉCEPTION DE SIGNAUX DE RADIODIFFUSION AU MOYEN DE REVÊTEMENTS INTELLIGENTS POUR DES DISPOSITIFS MOBILES

(30) Priority: 12.09.2007 US 971813 P
(43) Date of publication of application: 16.06.2010
(73) Proprietor: DeviceFidelity, Inc., Richardson, TX 75080 (US)
(72) Inventor: JAIN, Deepak, Garland TX 75044 (US)
(74) Representative: Peterreins, Frank
(86) International application number: PCT/US2008/076319
(87) International publication number: WO 2009/036395

(56) References cited:
- WO-A-01/22695
- US-A1- 2002 055 368
- US-A1- 2002 065 902
- US-A1- 2006 291 483

## Description

### CLAIM OF PRIORITY

This application claims priority to U.S. Patent Application Serial No. 60/971,813, filed on September 12, 2007.

### TECHNICAL FIELD

This invention relates to network communications and, more particularly, to receiving broadcast signals using covers for mobile devices.

### BACKGROUND

Portable electronic devices and tokens have become an integrated part of the regular day to day user experience. There is a wide variety of common portable and handheld devices that users have in their possession including communication, business and entertaining devices such as cell phones, music players, digital cameras, smart cards, memory token and variety of possible combinations of the aforementioned devices and tokens. All of these devices share the commonality that consumer are accustomed to carrying them with them most of the time and to most places. This is true across the various demographics and age groups regardless of the level of the sophistication of the consumer, their age group, their technical level or background.

These common handheld devices offer options for expandable memory. Micro Secure Digital (microSD) is the popular interface across high-end cellphones while SD and MultiMediaCard (MMC) interfaces are also available in limited models. MicroSD is the least common denominator supported by the majority of these devices and tokens (in terms of size). In addition, adaptors are available to convert a MicroSD into MiniSD, SD, MMC and USB Although most popular MP3 player (iPOD) offer's a proprietary interface, competing designs do offer standard interfaces. Digital cameras offer mostly SD and MMC while extreme Digital (xD) is another option. Micro and Mini versions of these interfaces are also available in several models. Mini-USB is increasingly available across cellphones, digital cameras and MP3 players for synchronization with laptops.

Various content providers and service providers are developing digital broadcast networks that will be able to provide TV like viewing channel an mobile devices. Several new mobile handset models are also being developed that embed a miniature broadcast receiver that can receive these digital broadcast signals and use a media player software to offer channel viewing to the consumer. In order to secure access and provide access to premium content like movies, based pay-TV content and music albums, the service provider uses a specially designed conditional access system (CAS) which is able to verify the user's subscription and unscramble premium content before rendering it for viewing.

Such capability can be added to the PC, by adding a hardware transceiver that can be added to the PC using peripheral interfaces such as USB, PCMCIA, PCIA or mini-PCI (and others). To control access, the conditional access system is implemented in the same hardware and comprises of a smart card that securely stores the user's identity and his subscription privileges. In addition, the service provider provides an Electronic Service Guide that the user can use to select the channels that he wishes to view. This software is typically installed on the PC together with the access driver for the hardware. In some options, the default channel guide provided by the operating system of the PC (such as Windows Vista / MacOS etc.) can be used.

There are other consumer devices such as smartphones, MP3 player game players and portable vides players that may make use of broadcast content connection for useful applications. Since the hardware for the broadcast receiver and the conditional access system is specialized and requires a dedicated processor to receive and unsuramble content, many of these devices may not be upgraded with an embedded broadcast reception capability. In addition, these devices also lack PCMCIA or USB type expansion slots where broadcast receiver and CAS hardware could be inserted. These devices also typically lack the slot for a hardware security token such as a smart card in order to provide secure access to a fee based premium TV content. These devices also need memory for the users to record content, captured though these devices. The need for such memory is growing at a rapid rate.

U.S. Patent Publication 2006/0291483 describes a mobile telephone gateway and communication routing device (MPG) that is coupled through an electrical signaling transmission medium with a mobile telephone operative on a first communication network in accordance with a first communication protocol, for adding communication capabilities through at least a second communication network in accordance with a second communication protocol. A mobile communication system is also describe. The system includes MPG placed in-between mobile phone and battery and Subscriber Identification Module card. MPG connects to the SIM interface of mobile phone, using which it wraps SIM functionalities and controls call management. It connects to the data/signaling interface of mobile phone, using which it communicates with it, while communicating with the second network using another communication means.

U.S. Patent Publication 2002/0055368 describes a wireless digital transceiver, particularly to a wireless digital transceiver which can hitch a PDA thereon. It mainly includes a PDA interface, connect and transmit PDA input and output messages; a mobile communication module, can supply the function of wireless communication and the use of digital transmission and receiving; a communication bus, is connected between the PDA interface and mobile communication module to communicate message between the PDA and the mobile communication module; a power supply module, is connected to the PDA interface to supply electric power to the hitched PDA and the transceiver itself; a microprocessor, connect the communication bus for handling calculation and control in the transceiver; and a cover, can cover and fix all elements of the transceiver, and combine with a hitched PDA.

### SUMMARY

The present disclosure is directed to a system and method for receiving broadcast signals using intelligent covers. In some implementations, a cover for a consumer device includes side surfaces, of rear surface, a physical interface, a circuit, and a broadcast service card. The side surfaces and a rear surface form an opening that receives at least a portion of a consumer device. A first portion of at least one of the surfaces includes a connector for connecting to a port of the consumer devices. The circuit connects the physical interface to the connector. The broadcast, service card connects to the physical interface and receives briadcasted content independent of the consumer device.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIGURE 1 is an example updating system in accordance with some implementations of the present disclosure;
FIGURES 2A to 2C illustrate cross sectional views of some implementations of the cover of FIGURE 1;
FIGURES 3A and 3D illustrate example slots in the cover of FIGURE 1;
FIGURE 4 illustrates an example converter module of the cover of FIGURE 1;
FIGURE 5 is an example service system that transmits transaction information;
FIGURE 6 is an example service card of FIGURE 5 in accordance with some implementations of the present disclosure;
FIGURE 7 is an example Central Processing Unit (CPU) of the service card of FIGURE 6;
FIGURE 8 is a schematic diagram illustrating personalization processes of intelligent cards.
FIGURES 9A and 9B are flow charts illustrating an example method for initialize an intelligent card;
FIGURES 10 is a flow chart illustrating an example method for activating a service card;
FIGURES 11A to 11C are examples of call flow illustrating call sessions with an intelligent card;
FIGURE 12 is a flow chart illustrating an example method for synchronizing ESG data: and
FIGURE 13 is a flow chart illustrating an method receiving selected broadcast content.

Like reference symbols in the various drawings indicate like elements.

### DETAILED DESCRIPTION

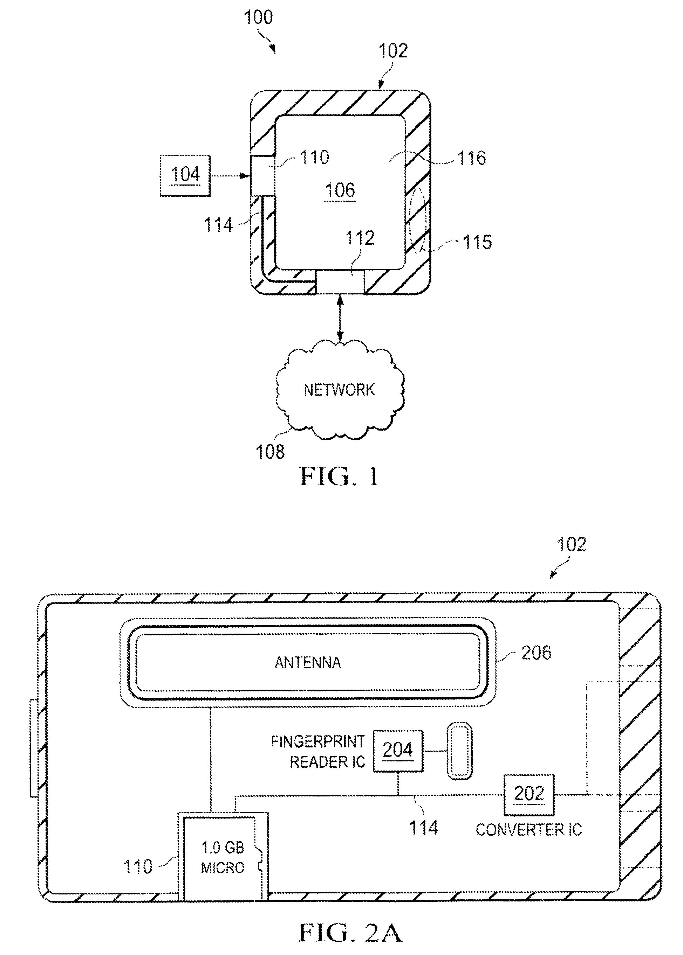

FIGURE 1 is a block diagram illustrating an example system 100 for augmenting a mobile device, for example an iPhone, with additional external devices using a cover for the mobile device. For example, the system 100 may add an external miceSecureDigital (microSD) slot to a mobile host device, for example am iPhone, using a flexible cover that encloses at least a portion of the mobile device and connects to a port of the mobile device. Aside from microSD, the system 100 may add an external memory device to a mobile device using ether interfaces such as, for example, MultiMediaCard (MMC), SD, miniSD, Firewire, and/or others. By adding external devices (*e.g.*, memory, transaction cards), the system 100 may upgrade a mobile device that does not include expansion slots with additional external devices while substantially maintaining the dimensions of the device. For example, the cover may increase the dimensions of the by 5 percent or less. In other words, the cover may add a device slots to a mobile device while substantially maintaining original attributes such as speaker outputs, network signal strength, headphone jacks, battery charging, docking ports, and others. In some implementations, the system 100 may update mobile devices with external memory devices, transaction cards, and/or other devices. For example, the intelligent card may wirelessly execute transactions with different enterprises using a single intelligent card and independent of a mobile host device. In other words, a single intelligent card included with the cover may execute a payment transaction with a financial institution, an access control transaction with a enterprise network, a ticket purchase transaction with a transmit authority and/or an identity validation transaction with a government agency. In such implementations, each of the transactions can securely identify a user and user privileges with respect to the service being received from the different enterprises. In doing so, the cover including the intelligent card may operate as a logical wallet. In some of these implemenlations, the cover may include a circuit that converts signals between a form compatible with an external memory device (*e.g*., microSD) and a form compatible with the mobile device (*e.g.*, USB). In addition, the system 100 may include an intelligent card integrated into an the cover such that removable may at least partially damage the cover.

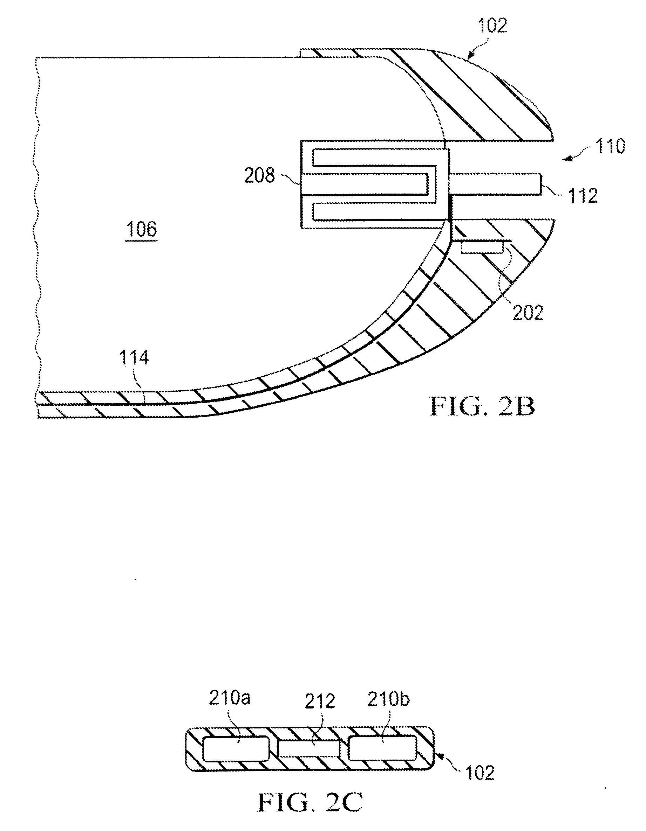

At a high level, the system 100 includes a cover 102, an external device 104, a mobile device 106 and a network 108. The cover 102 including a slot 110 for connecting to the external device 104, a connector 112 for connecting to the mobile device 106, and a circuit 114 for communicably connecting the slot 110, an antenna 115 for boosting transmission and reception of RF signals, and the connector 112. The cover 102 may update the mobile device 106 with an external device 104, In addition, the cover 102 encloses at least a portion of the mobile device 106. In the case of enclosing a portion of the mobile device 106, the cover 102 may include other aspects that expose ports of the mobile device 106 for connecting with external peripherals such that the cover 102 does not substantially interfere with such connections. In other words, the cover 102 may either include ports substantially aligned with ports of the mobile device 106 or provide openings that allow substantially unrestricted access to the original ports of the device 106 (see FIGURE 2C). The mobile device 106 may be communicable coupled to the network 108. The mobile device 106 includes a Graphical User interface (GUI) 116 for presenting information to and/or receiving information from users.

The cover 102 can include any software, hardware and/or firmware configured to update the device 106 with one or more external devices slots. For example, the cover 102 may include a microSD slot and a physical interface for connecting to a port of the mobile device. In this example, the cover 102 may connect the microSD slot to the mobile device 106 using the physical interface. In some implementations, the cover 102 may include one or more of the following: one or more slots for external devices (*e.g*., memory, wireless transaction cards); one or more connectors that connect to the mobile device 106; one or more circuits for connecting the one or more slots to the one or more connectors; a conversion module that converts signals between different formats: a biometric reader that determines biometric information of a user of the mobile device 106; and/or other elements. In some implementations, the cover 102 may be formed of a flexible material such as, for example, silicone rubber a soft neoprene, and/or other material. The opening formed by the cover 102 may be substantially be the same as or less than the dimensions of the mobile device 106. In the case of the opening dimensions being less, the cover 102 may be slightly flexible to stretch over the mobile device 106. The cover 102 may substantially maintain attributes of the mobile device 106, such as dimensions, accessibility to peripherals as provided by the device, changing, battery life, signal strength, access to display and all other input devices, connectivity to the wireless network if any, interface capacity to a PC if any and any other features provided by the device. In maintaining the attributes, the added functionality may not degrade the device performance in any manner such that certification by regulatory authorities (e.g., FCC) and warranty by the issuer of the device 106 is compromised.

In the illustrated implementation, the cover 102 includes the slot 110, the connector 112 and the circuit 114. The slot 110 may comprise an MMC, miniMMC, microMMC, SD, mmiSD, microSD, and/or other slots. The slot 110 may including an opening such that the external device 104 may be inserted after the mobile device 106 is inserted into the cover 102. In some implementations, the slot 110 may be formed in the rear surface such that cover 102 is removed or at least portion moved away from the surface of the mobile device 106 to insert the external device 104. In some implementations, the slot 110 and the external device 104 are integrated into the cover 102, and in this case, the external device 104 may not be removable without damaging the cover 102. The connector 112 includes at least a portion that connects to a port of the mobile device 106. The connector 112 may include a USB, iDock, microUSB, Firewire, Serial, and/or other connectors offered by the mobile device 106. In some implementations, the connector 112 may include a first interface for connecting to the mobile device 106 and a second interface for connecting with external devices. The second interface may be substantially similar in dimensions and interface capabilities as the original connector of the mobile device 106. In these instances, the connector 112 may pass one or more signals from external devices to the mobile device 106 without, for example, interfering with the connecting to the external device 104. For example, the connector 112 may include a second interface that connects with the power supply of the mobile device 106 and passes the signal to the mobile device 106 for charging. The circuit 114 can include any software, hardware, and firmware for communicably connecting the slot 110 with the connector 112. For example, the circuit 114 may include one or more wired connections between the slot 110 and the connector 112. In addition, the circuit 114 may also include a booster antenna that may enhance the signal reception capability of the mobile device 106 and/or the signals reception capability of any wireless transaction cards inserted into the slot 110 (*see* FIGURE 2A). In some implementations, the circuit 114 may execute one or more of the following: pass signals between the slot 110 and the connector 112; translated or otherwise convert signals between forms compatible with the external device 104 and forms compatible with the mobile device 106; detect biometric information of a user of the mobile device 106; manage access to the external device 104 based, at least in part, on detected biometric information; enhance signal reception of the host device via an integrated booster antenna; enhance signal reception of a wireless transaction card inserted into the slot; provide access to software and system on the device inserted into the slot for an application residing on the mobile device; and/or other processes.

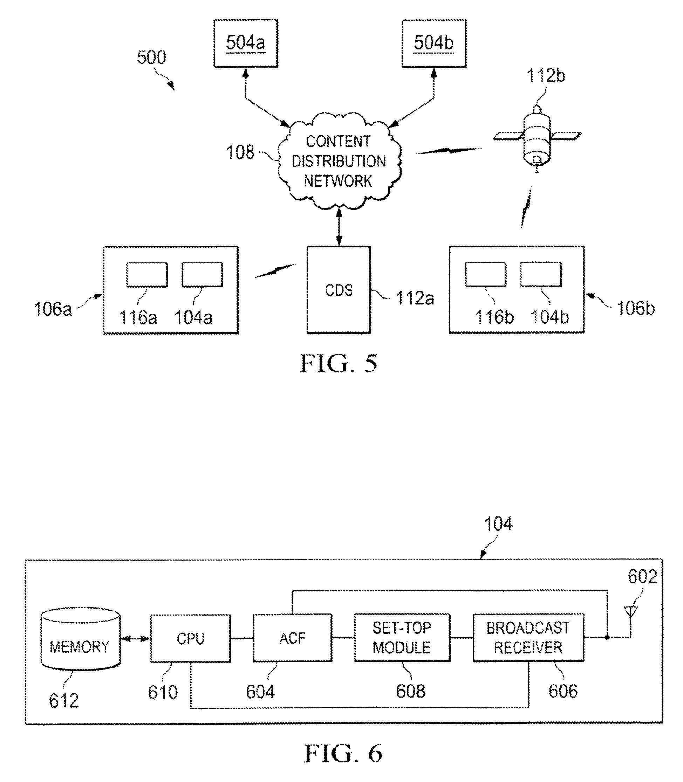

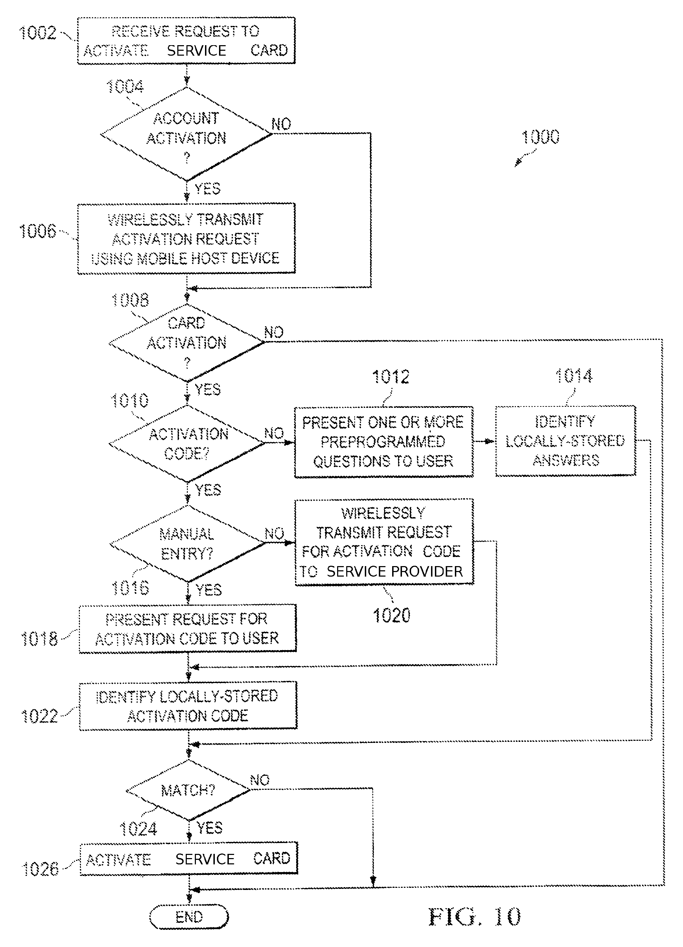

The extend device 104 can include any software, hardware, and/or firmware configured to update the mobile device 106 with one or more features and/or functions. For example, the external device 104 may include solid-state memory (*e.g.*, flush, EEPROM) for storing information receded, for example, from the mobile device 106. The external device 104 may update the mobile device 106 with, for example, external memory, a wireless transaction card, a broadcast receiver, a broadband transceiver, and/or other elements. In regards to memory, the external device 104 may be a Flash or memory package, which is non-volatile memory that may be electrically erased and reprogrammed. The external device 104 may be a memory card, USB Flash drives, and/or other memory device. For example, the external device 104 may include Electrically Erasable Programmable Read-Only Memory (EEPROM) that is erased and programmed in blocks. In regards to memory cards, the extend device 104 may be MMC, microMMC, miniMMC, SD, microSD, miniSD, Memory Stick, Memory Stick Duo, xD-Picture Card, Secure Digital High Capacity (SDHC), and/or other memory card. In some implementations, the external device 104 may include a memory capacity between 1MB and 1TB. Alternatively or in addition, the external device 104 may be a transaction card as discussed with respect to FIGURES 5 to 14. In these implementations, the external card 104 may wirelessly execute transactions with, for example, a point of sale device. In some implementations, the external card 104 is integrated/embedded into the cover 102, The external card 104 may store user credentials for a credit card, a debit card, a prepaid card, a gift card, a checking account, and/or other user accounts. In addition, the intelligent card may also store user credentials fur other applications such as loyalty (points for purchase), airline (access to clubs, check-in), state (driving license), memberships (clubs) and/or others where user credentials are used to identify user so that goods and/or services can be provided. By storing multiple user credentials in a single external card 104, the system 100 may execute transactions with different institutions without requiring multiple instruments, as discussed in more detail with respect to FIGURES 5-14.

The mobile device 106 comprises an electronic device operable to interface with the cover 102 using one or more ports. For example, the mobile device 106 may have an iDock port that connects with the cover 102. As used in this disclosure, the mobile device 106 is intended to encompass cellular phones (*e.g.*, iPhone), data phones, pagers, portable computers, SIP phones, smart phones, personal data assistants (PDAs), digital cameras, MP3 players, camcorders, one or more processors within these or other devices, or any other suitable processing devices capable of communicating information with the cover 102 through one or more ports and may not have otherwise have a slot for external card 104 could be directly plugged in. The one or more ports may include, for example, a USB port, an iDock port, a FireWire port, a serial port and/or any other interface port provided by the mobile device for connectivity with peripherals, and/or other ports. In some implementations, the mobile devices 106 may be based on broadcast radio technology. For example, the mobile device 106 may be a PDA operable to wirelessly connect with an external or unsecured network. In another example, the mobile device 106 may comprise a digital multimedia player that includes an input device, such as a keypad, a jog wheel, a jog dial, touch screen, or other device that can accept information or allows selection of user interface elements, and an output device that conveys information associated with the system 100, including digital data, visual information, or GUI 116.

The GUI 116 comprises a graphical user interface operable to allow the user of the mobile device 106 to interface with at least a portion of the system 100 for any suitable purpose, such as executing transactions and/or and presenting transaction history. Generally, the GUI 116 provides the particular user with an efficient and user-friendly presentation of data provided by or communicated within the system 100 and/or also an efficient and user-friendly means for the user to self-manage settings and access services offered by an institution. The GUI 116 may comprise a plurality of customizable frames or views having interactive fields, pull-down lists, and/or buttons operated by the user. The term graphical user interface may be used in the singular or in the plural to describe one or more graphical user interfaces and each of the displays of a particular graphical user interface. The GUI 116 can include any graphical user interface, such as a generic web browser or touch screen, that processes information in the system 100 and presents the results to the user.

Network 108 facilitates wireless or wired communication between institutions and any other local or remote computer, such as the mobile device 106. Network 108 may be all or a portion of an enterprise or secured network. While illustrated as single network, network 108 may be a continuous network logically divided into various sub-nets or virtual networks without departing from the scope of this disclosure, so long as at least a portion of network 108 may facilitate communications with the mobile device 106. In some implementations, network 108 encompasses any internal or external network, networks, sub-network, or combination thereof operable to facilitate communications between various computing components in system 100. Network 108 may communicate, for example, Internet Protocol (IP) packets, Frame Relay frames, Asynchronous Transfer Mode (ATM) cells, voice, video, data, and other suitable information between network addresses. Network 108 may include one or more local area networks (LANs), radio access networks (RANs), metropolitan area networks (MANs), wide area networks (WANs), all or a portion of the global computer network known as the Internet, and/or any other communication system of systems at one or more locations.

FIGURES 2A to 2C illustrate cross-sectional views of the cover 102 of FIGURE 1. In particular, the views illustrate the components of the cover 102 that at least augment the mobile device 106 with the card 104. In FIGURE 2A, the cover 102 includes a port-to-card converter module 302 (*e.g*., USB-to-microSD), a reader 204, and an antenna 206. The converter module 202 can include any software, hardware, and/or firmware that converts between card-processable signals and signals compatible with the mobile device 106. In the illustrated example, the converter module 202 converts between SD signals and USB signals. The reader 204 can include any software, hardware, and/or firmware that verifies or otherwise determines user information such as biometric information. In the illustrated example, the reader 204 determines fingerprints of a user and may verify whether the user has access to the card 104. In addition, the reader 204 may pass the biometric information to an application on the mobile device 106 (through the converter 202 and/or the connector) for, for example, to securely verify the identity of the device holder. The mobile host device 106 may include biometric identity verification for applications such as mobile banking. In some implementations, an application can use the biometric reader 204 to first register the user's biometric identity on first use and thereafter match the biometric identity of the device holder with the registered biometric identity. The secure storage of the biometric identity for the user may be provided by the removable secure card 104 or could be located on a special secure memory embedded in the cover. For example, when the user changes devices 106, the identity footprint may be erased from the initial device (if be removes the cover 102 and the card 104). In addition, another application running on the CPU of the cover 102 may also use the biometric data to secure access to certain features and/or services. The antenna 206 may wirelessly transmit and receive RF signals associated with the card 104. In the transaction-card implementation, the antenna 206 may extend the transaction range of the card 104 for wirelessily executing transactions. FIGURE 2B is another illustration of a cross-sectional view of the cover 102. In this view, a connector 208 of the mobile device 106 is illustrated. For example, the connector 208 may be an iDock connector of an iPhone having 30 pins. FIGURE 2C is yet another cross sectional view of the cover 102. In this view, the cover 102 includes the openings 214A and 214B for speakers included with the mobile device 106 and a cavity 212 for connecting a power supply to the connector 112 and the connector 208. In this case, the mobile device 106 may be charged using the connector 208 without removing the cover 102.

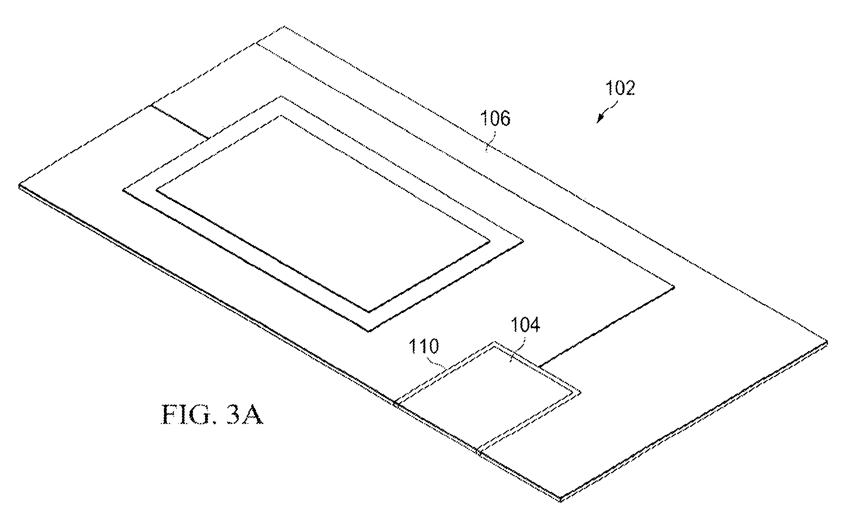

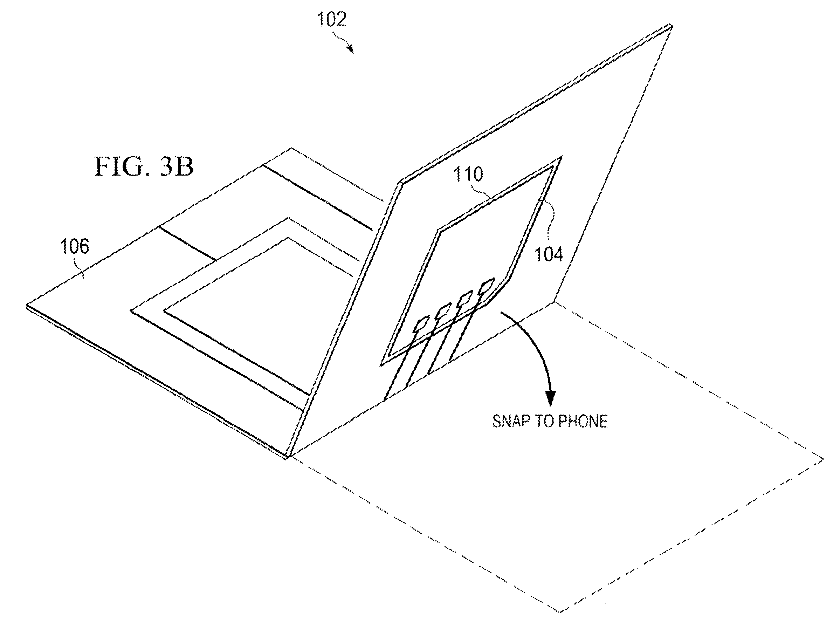

FIGURES 3A and 3B illustrate different implementations of the slot 110. In FIGURE 3A, the slot 110 may be formed in the cover 102 such that a card 104 may be inserted and removed without lifting or otherwise removing at least a portion of the cover 102. In FIGURE 3B, the slot 110 is formed on the inside of the cover 102 such that the cover is at least partially lifted or otherwise removed to insert and remove the card 104.

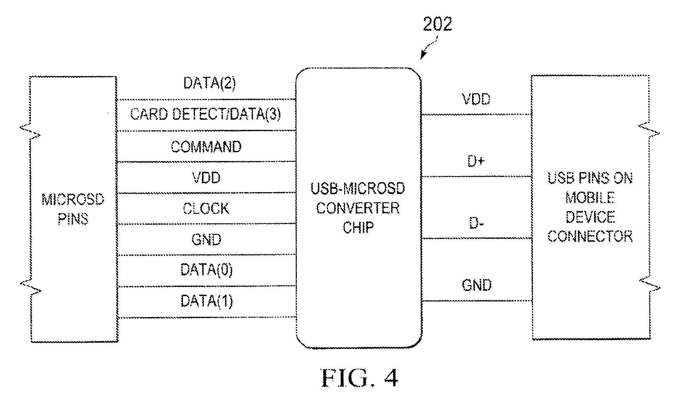

FIGURE 4 illustrates some implementations of the convert module 202 that converts between USB and SD signals. As illustrated, the converter module 202 may receive a plurality of inputs associated with the card 104 and convert the signals to a form compatible with the connector 208 of the mobile device 106. In some implementations, the converter module 202 may convert, for example, between data formats. In some implementations, the converter module 202 may pass inputs to corresponding outputs such as for VDD and GND.

FIGURE 5 is a block diagram illustrating an example service system 500 for receiving broadcast signals using an intelligent card. For exemple, the system 500 may include a SecureDigital (SD) card that receives broadcast signals (*e.g*., terrestial digital video broadcast) and presents content though a mobile host device based, at least in part, on the received broadcast signals. Broadcast signal may include terrestrial and/or satellite signals that encode images, audio, video, and/or other content. For example, the broadcast signals may be Digital Video Broadcasting - Handheld (DVB-H), DVB-H2, Digital Video Broadcasting - Satellite services to Handhelds (DVB-SH), Forward Link Only (FLO), Digital Multimedia Broadcasting (DMB), Multimedia Broadcast Multicast Service (MBMS), satellite radio, and/or others. Aside from SD, the system 500 may include other interfaces that connect an intelligent card to the host device such as, for example, MultiMediaCard (MMC), miniSD, microSD, Universal Serial Bus (USB), Apple iDock, Firewire, and/or others. An intelligent card may be a device configured to insert into or otherwise attach to a mobile host device and access or otherwise receiving broadcast signals (*e.g*., e.g., satellite radio) independent of the mobile host device. In some implementations, the intelligent card may be shaped as a microSD card, miniSD card, or microSD card including, for example, notches, raised portions and/or other features. In some implementations, the system 500 may modify, translate, or otherwise convert received broadcast signals to a form processable by or otherwise native to the mobile host device 106. In converting the signal protocols, the system 500 may present media content otherwise foreign to the mobile device 106. Foreign, as used herein, means any component, object, value, variable, content and/or data and/or data schema that is not directly processable, accessible, receivable or otherwise capable of communicating with the mobile devices 106. In some implementations, the conversion of the foreign content to compatible forms may be transparent to the user of the mobile device 106. By providing an intelligent card, the system 500 may access foreign content without either requiring additional hardware, software, and/or firmware in the mobile host device.

At a high level, the system 500 includes the mobile devices 106a and 102b and the content provider 504 coupled to the network 108. The mobile device 106 includes a GUI 116 for providing presenting content and a service card 104 for independently converting foreign content to forms compatible with the mobile device 106. In some implementations, the service card 104 may selectively switch antenna on and off in response to an event such as a selection of a graphical element using the GUI 116. The network 109 includes a content distribution stations 112a and 112b (*e.g.*, broadcast tower, satellite, IP broadcast tower) for broadcasting content to the service cards 110.

Each mobile device 106 comprises an electronic device operable to interface with the service card 104 For example, the mobile device 106 may receive and transmit wireless and/or wireless communication with the system 500. As used in this disclosure, the mobile devices 106 are intended to encompass cellular phones, data phones, pagers, portable computers, SIP phones, smart phones, personal data assistants (PDAs), digital cameras, MP3 players, camcorders, video player, game player, one or more processors within these or other devices, or any other suitable processing devices capable of communicating information with the service card 104. In some implementations, the mobile devices 106 may be based on a cellular radio technology. For example, the mobile device 106 may be a PDA operable to wirelessly connect with an external or unsecured network. In another example, the mobile device 106 may comprise a smartphone that includes an input device, such as a keypad, touch screen, mouse, or other device that can accept information, and an output device that conveys information associated with a transaction with the provider 504, including digital data, visual information, or GUI 116.

The GUI 116 comprises a graphical user interface operable to allow the user of the device 106 to interface with at least a portion of the system 500 for any suitable purpose, such as content channels and/or displaying the Electronic Service Guide (ESG). Generally, the GUI 116 provides the particular user with an efficient and user-friendly presentation of data provided by or communicated within the system 500 and/or also an efficient and user-friendly means for the user to self-manage seltings and access channels offered by the content provider 504. The GUI 116 may comprise a plurality of customizable frames or views having interactive fields, pull-down lists, and/or buttons operated by the user. The term graphical user interface may be used in the singular or in the plural to describe one or more graphical user interfaces and each of the displays of a particular graphical user interface. The GUI 116 include any graphical user interface, such as a generic media player or touch screen, that processes information in the system 500 and presents the results to the user.

The service card 104 can include any software, hardware, and/or firmware configured to receive broadcast signals from the distribution stations 112. For example, the serves card 104 may receive content broadcasted by the content provider 504 and translate, map or otherwise convert the received content to forms viewable with the mobile device 106. In some implementations, the service card 104 can present received content through the GUI 116. In some implementations, the service card 104 may include one or more chipsets that execute an opening system and security process to receive broadcast signals independent of the mobile host device 106. In doing so, the mobile device 106 may not require additional hardware, software, and/or firmware to present foreign content such as digital TV, IP-TV, satellite radio, satellite TV, and/or other broadcast services. In some implementation, the service card 104 may execute one or more of the following: wirelessly receive signals broadcasted by the distribution stations 112; determine subscription levels of the card 104 based, at least in part, on locally-stored user information; descramble content available to the user in accordance with the subscription levels; translate between broadcast protocols (*e.g.*, DVB, FLO, MBMS, DMB) and protocols compatible with the service card 104; translate between service-card protocols and protocols Compatible with mobile device 106; present broadcasted content for viewing through the GUI 116; execute applications locally stored in the service card 104; selectively switch the antenna on and off based, at least in part, on one or more events; authenticate user based, at least in part, on informations locally stored in the service card 104; present the Electronic Service Guide application for the user through the GUI 116 for selection of available channels; present menu options for managing recordable content and configuring options for the personal video recorder application via GUI 116; present the personal video recorder application for viewing of recorded content via GUI 116; and/or others. In some implementations, the service card 104 may receive a broadcast signal in response to at least a user selecting a graphical element in the GUI 116. In some implementaions, the service card 104 may selectively switch the antenna between an on and off state in response to one or more events (*e.g*., user request, completion of broadcast, change of host device, change of network connection of the host device, change of location). The service card 104 may include a communication module with a protocol translation module, antenna tuning circuit, power circuit and a miniature antenna tuned to receive broadcast signals.

In some implementations, the service card 104 may initiate receiving to a broaden signal in response to at least a user seating a graphical element in the GUI 116. In some implementations, the service card 104 may selectively switch the antenna between an on and off state in response to one or more events. The one or more events may include a user request, complexion of broadcasted content insertion of card 104 in a different mobile device, location change, timer events, detection of incorrect user ID and password entered by the user, message received from the current provider 504 using a broadcast/cellular signal, and/or others. For example, the service card 104 may receive one or more commands to switch the antenna off from the distribution station 512 or from the broadcast/cellular core network. In some implementations, the service card 104 may request user identification such as a PIN. a user ID and password combination, biometric signature, and/or others.

In regards to translating between protocol the service card 104 may process information in, for example, ISO 7816, a stand security protocol, and/or others. In this case, the service card 104 may translate between a broadcast protocol and the service-card protocol. Broadcast protocols may include DVB, DMB, FLO and/or MBMS. In some implementations, ISO 7816 commands may be encapsulated within interface commands used to transmit data between the mobile host device 106 and the card 104. In addition, the service card 104 may interface the mobile device 106 through a physical interface such as MicroSD, Mini-SD SD, MMC, miniMMC, microMMC, USB, minUSB, microUSB, firewire, Apple iDock, and/or others. In regard to security processes, the service card 104 may implement one or more. Conditional Access Systems (VideoGuard, Irdeto Access, Nagravision, Cortax, Viaccess and Mediaguard (a.k.a. SECA)). The CAS may use encryption algorithms to descramble or otherwise decrypt broadcast signals to determine encoded content. In some implementations, the service card 104 may execute private key (symmetry algorithms) such as Data. Encryption Standard (DES), Triple DES (TDES) and/or others or public key (asymmetric algorithms) such as RSA, elliptic etudes, and/or others to implement the chosen CAS system compliant with the service provider. For example, the service card 104 may include one or more encryption keys such as public-private keys. In addition, the service card 104 may include memory (*e.g*., Flash, EEPROM) including a secured token accessible by the content providers 504 to store access rights of the user. The service card 104 may also store user data, applications, offline Webpages, and/or other information. For example, the service card 104 may include a secure token that identifies content that the user subscribes to or can otherwise access. In addition, the service card 104 may execute or otherwise include digital rights management technology to substantially prevent illegal copying, storing or distributing or other violations of digital rights.

The service card 104 may present content (*e.g*., audio, video) to the user using the GUI 116. In response to initiating foreign-content accces, the service card 104 may automatically present an offline Web page through the GUI 116. In some implementations, the offline Web page can be associated with a content provider 504. In some implementations, the service card 104 can be backward compatible and operate as a mass storage device. For example, if the wireless interface of the service card 104 is not available or deactivated, the service card 104 may operate as a mass storage device enabling users to access data stored in the memory component (*e.g*., Flash). In some implementations, the service card 104 can execute a set of initialization commands in response to at least insertion into the mobile device 106. These initialization commands may include determining device related information for the mobile device 106 (*e.g.*, device ID, device capabilities), determining user relating information (*e.g*., user ID and password), incrementing counters, setting flags and activating/deactivating functions according to pre-existing rules and/or algorithms.

In some implementations, the service card 104 may automatically, execute one or more fraud control processes. For example, the service card 104 may identify an operational change and automatically deactivate the card 104. The service card 104 may execute two fraud control processes: (1) determine a violation of one or more rules; and (2) automatically execute one or more actions in response to at least the violation. In regards to rules, the service card 104 may locally store rules associated with updates to operational aspects of the service card 104. For example, the service card 104 may store a nile indicating a change in mobile host device 106 is an operational violation. In some implementations, the service card 104 may store rules based, at least in part, on updates to one or more of the following: device ID; subscription period; registration information CAS parameters; and/or other aspects. In response to one or more events matching or otherwise violating rules, the service card 104 may execute one or more processes to substantially prevent access to broadcasted content. In some implementations, the service card 104 may execute a command based, at least in part, on an event type. For example, the service card 104 may re-execute an activation process in response to at least a specified event type. In some implementations, the service card 104 may execute a command to disconnect the GUI 116 from die service card 104. The service card 104 may present a disconnection notification through the GUI 116 prior to executing the command. In some the service card 104 may provided options for the user to configure a nile table (PVR rule table) relaled to the personal video recorder application. This may allow the user to specify rules according to which content is automatically recorded by the service card.

In regards to accessing broadcasted services, the interface between the service card 104 and the station 512 may be DVB-H, DMB, MBMS, or FLO for Mobile-TV and Sirius/XM for Satellite Radio or other digital Mobile-TV and/or satellite broadcast interfaces. Based on the PVR Rule Table, the service card 104 may receive content from the broadcast content provider 504 and store the content in real-time to the memory. The content player of the mobile device 106 may then access the stored content using, for example, a media player and access to the GUI 116. The antenna mode of the service and 104 may be set to physical authentication only because the service card 104 may use the mobile device 106 to present video and/or audio. The secure of the service card 104 may operate was set-top box (CAS token). In this implementation, the secure element my operate in two different roles as illustrated in Table 1 below,

**Table 1**

| **DVB-H / MediaFLO or other Mobile-TV Broacdast** | **XM / Sirius or other Satelite Radio Broadcast** |
|---|---|
| Digital TV transmissions are generally scrambled to allow content providers and content providers to offer pay-per-use and tiered subscription services to the end users. In order to perform this capability, there are two types of protection that may be implemented: | This is a simpler case where the satellite radio content providers may offer service to users who have purchased a particular subscription plan. Only protection applicable here-in is hence the service protection which would be implemented by the secure element. The secure element will store an active subscription for the end-user which will enable the plug-in to securely receive transmission and produce output |
| a) Service Protection: In this case, subscriptions related access rights are stored on a secure a secure token (such as the smart card in Cable or Satellite Set-top boxes). As and when a user purchases a premium channel; package or pay-per-use event, access rigid to the same is downloaded to this secure token. The algorithms and method of protection are generally provider dependent and in generally referred to as the CAS (Conditional Access Systems. The secure element in the plug-in, being a secure token, will host the CAS algorithm compliant with the content provided and the access keys management that are managed dynamically depending on the content subscribed to by the end-user | |
| b) Content Protection. In this case, the content download contains digital rights management technology wherein it cannot be illegally copied, stored or distributed. If required by the content provider, the secure element will implement the required DEM scheme of the content provider such that the content downloaded or viewed is used by the end-user according to the restrictions imposed by the content provider | |

The table is for illustration purposes only. The activation of the service card 104 may include some, all, or different aspects of the chart.

In some implementations, the user may acquire the service card 104 when subscribing to a content provider's broadcast content service. The activation process may depend on whether the mobile device 106 includes an interface such as a screen, a keyboard and internet access. In some implementations, the service card 104 may be activated online or offline. Online activation may occur when the device 106 includes an interface such as screen, keyboard and wireless internet access (Cellphone, laptop or Wireless PDA), offline activation may occur when a device 106 does not include internet capability or doesn't have a screen / keyboard (MP3/4 players). These two activation processes are illustrated below in Table 2,

**Table 3:**

| **Online Activation** | **Offline Activation** |
|---|---|
| When the device has internet access and has a screen / keyboard. It is assumed to have an internet browser and capable of browsing to any URL. In this case, when the plug-in inserts, it performs the plug-in bootstrap and authentication process Once successful the device is able to take the user to a landing page on a browser where the user can perform the registration and activation process. | In this case, the user may cradle his device as the PC than has an internet access and lounch the included activation software. This sofware wall take the user to the content provider's landing page to perform the registration and activation process. |

The table is for purposes only. The activation of the service card 104 may include some, all, or different aspects of the chart.

In some implementations, the service card 104 may operate as a personal video recorded (PVR). For example, the service card 104 may include GBs of flash memory that may store multimedia content. The service card 104 may include a microcontroller sufficiently strong to operate a recording process while streaming the content to the content player on the mobile device 106 at the same time. The service card 104 may include an application residing on a protected area of the memory that would run a PVR and an Electronic Service Guide (ESG) application to enable a user to review the content program and select the programs recording. The DVR and ESG application may enable playing back. The recorded content from the memory. In comparison, the service card 104 may include a stronger microcontroller that has an internal clock (*e.g.*, an ARM series processor). The service card 104 may include a special form factor that allows the SD interface to connect to a SD to USB adaptor for laptop use. In some implementations, the advice card 104 includes a secure element OS to enable the functionality describes above. The service card 104 may implement a CAS algorithm based on content provider's specification. The secure element OS may structure data in the secure element to enable storage of subscription data for the end user. The microcontroller OS may be capable of personalizing the secure element by loading/updating user subscription parameters. In addition, the microcontroller OS may be capable of presenting the service card 104 as SD mass storage to the mobile device 106. In addition to operating the memory, secure element, the broadcast receiver chipset and the antenna availability, the microcontroller OS may implement a very fast content writing function on the memory in real-time, receive the ESG in real-time from the broadcast content provider 204, and interact with the host device's content player to display the content. The secure element may operate as the CAS and subscription storage token because of cryptographic capabilities. The device application section may be used to store provider specific applications that operate from this segment of the memory or are installed on the mobile device 106 form this segment of the memory.

In some implementations, the service card 104 way include broadcast applications and WAN connectivity. In this case, the user may perform payment to a third party by connecting over the internet and/or performing peer-to-peer payment by connecting to another user with the same functionality. In some implementations, the service card 104 may include broadcast applications and broadcast reception capabilities. In this case, the user may purchase content in real-time and pay for merchandize advertised over the broadcast content in real-time.

The content distribution network 108 facilitates wireless or wired communication between the content providers 504 and any other local or remote computer. The distribution network 108 may be all or a portion of an enterprise or secured network. While illustrated as single network, the distribution network 108 may be a continuous network logically divided into various sub-nets or virtual networks without departing from the scope of this disclosure, so long as at least a portion of distribution network 108 may facilitate communications of transaction information between the content providers 504. In some implementations, the distribution network 108 encompasses any internal or external network, networks, sub-network, or combination thereof operable to facilitate communications between various computing components in system 500. Network 108 may communicate, for example, Internet Protocol (IP) packets, Frame Relay frames, AsynchronousTransfer Mode (ATM) cells, voice, video, data, and other suitable information between network addresses. Network 108 may include one or more local area networks (LANs), radio access networks (RANs), metropolitan area networks (MANs), wide area networks (WANs), all or a portion of the global computer network known as the Internet, and/or any other communication system or systems at one or more locations. In some implementations, the distribution network 108 include the content providers 504a-c.

Content providers 504a-c comprises an electronic device (e.g., computing device) operable to broadcast content. In some implementation, the content providers 504 can provide broadcast signals that encodes content displayable by the service card 104. The content providers 504 may transmit one or more of the following: serial programs (*e.g.*, television series), movies, news, opinions, education content, training, sports events, Web pages; advanced blogging sites. travel-related content, food and/or cooking content; entertainment; topical movies and/or videos (*e.g*., surfing, sailing, racing, extreme sports, etc.); political content (*e.g*., campaigning); adult content; court and/or trail programming; local-government content (*e.g*., C-SPAN); local programming (*e.g*., Wayne's World); performing arts (*e.g*., theater, concerts, music videos, etc.); virtual shopping malls; satellite radio content (audio only channels); and/or other content. The provided content may be in any suitable format such as MPEG, streaming, MP3, realtime, WMV, and/or others. In the illustrated implementation, the content providers 504 includes a conditional access module 124 for authenticating a user and associated privileges prior to providing access to services. For example, the CAS module 124 may transmit a request for information associated with the user such as subscriber ID, receiver ID, PIN, usemame and password, and/or other information. Based, at least in part, on information associated with the user information, the CAS module 124 may determine available services, content, level of services, and/or other aspects of the requested foreign service.

In some implementations, the service card 104 may operate in accordance with one or more of the following modes: active receiver; self train; killed; memory; inactive; and/or other modes. The service card 104 may operate active-receiver mode to present the service card 104 as a broadcast receiver. In this mode, the service card 104 may execute applications access broadcast services through the broadcast network 108. After the antenna of the service card 104 is activated in this mode, the network 108 may detect the presence of the service card 104. In this implementation, the mobile device 106 may not require additional software to access the services.

In regards to the self-train mode, the service card 104 may receive personalization information from another receiver. In some implementations, the self-train mode can be activated by a special action (*e.g*., a needle point press to a small switch, entry of an administrative password via the GUI 116). In response to at least activating this mode, the service card 104 may be configured to receive personalization data over, for example, the short range wireless interface from another peer service card or a wired connection with the home broadcast receiver. Personalization data received in this mode may include encrypted information that is stored in secured memory of the service card 104. In some implementations, the service card 104 in this mode may receive the information through a wireless interface of a transmitter and/or others. The service card 104 may then synthesize the information that corresponds to the user account and personalize an internal security module that includes, for example, service applications for accessing services from the GUI 116 and associated user credentials. The self-train mode may be used to re-personalize the service card 104 in the field. In some implementations, all previous data can be deleted if the self-train mode is activated. The self-train mode may be a peer-to-peer personalization mode where the card 104 may receive personalization information from another service card 104. This mode may represent an additional personalization mode as compared with factory, store and/or Over-The-Air (OTA) personalization scenarios which may be server to client personalization scenarios. In some implementations,the self train mode may be a peer-to-peer personalization mode where the service card 104 receives personalization information from another service card. Since two service cards 110 are used in this mode, this mode may be different from a server-to-client personalization scenario all with a factory, store, and OTA personalization.

In regards to the inactive mode, the service card 104 may temporarily deactivate the wireless interface. In some implementations, the inactive mode can be activated through the physical interface with the mobile device 106 such as a SD interface. In response to at least the activation of the inactive mode, the service card 104 may temporarily behave as only a mass-memory card. In some implementations, the card 104 may also enter this state when the reset needle point is pressed. In this mode, the service card 104 may preserve locally-stored information including user information. In this mode, the service card 104 may execute the activation process and if successful may return to the active mode. The content provider 504 may use this mode to temporarily prevent usage in response to at least identifying at least potentially fraudulent activity.

In regards to the killed mode, the service card 104 may permanently deactivate the wireless interface. In some implementations, the killed mode is activated through the physical interface with the mobile device 106 such as a SD interface. In response to at least the activation of the killed mode, the service card 104 may permanently behaves as a mass memory stick. In the event that the reset needle point is pressed, the service card 104 may, in some implementations, not be made to enter any other modes. In addition, the service card 104 may delete user information in memory in response to at least this mode being activated. In some implementations, the providers 504 may use this mode to delete data from a service card 104 that is physically lost but still connected to the broadcast network 108.

In regards to the memory mode, the service card 104 may operate as a mass memory stick such that the memory is accessible through conventional methods. In some the service card 104 may automatically activate this mode in response to at least being removed from the host device, inserted into a non-authorized host device, and/or other events. The service card 104 may be switched to active mode from the memory mode by, for example, inserting the card 104 into an authorized device or may be switched from this mode into the self-train mode to re-personalize the device for a new host device or a new user account. In some implementations, the memory mode may operate substantially same as the inactive mode.

In some implementations, the service card 104 may be re-personalized/update such as using software device management process and/or a hardware reset. For example, the user may want to re-personalize the service card 104 to change host devices, to have multiple host devices, and/or other reasons. In regards to the software device management, the user may need to cradle the new host device with the service card 104 inserted to launch the software device management application. In some implementations, the software management application can be an application directly installed on a client, integrated as a plug-in to a normal synchronization application such as ActiveSync, available via a browser plug~in running on the plug-in provider's website, and/or other sources. The user may log into the application and verify their identity, and in response to verification, the application may allow access to a devices section in the device management application. The device management application may read the service card 104 and display the MAC addresses, signatures of the devices that he has inserted his plug-in to, and/or other device specific information. The mobile device 106 may be marked as active and the host device may be shown as disallowed or inactive. The application may enable the user to update the status of the new host device, and in response to at least the the device management application may install the signature on the new host device and mark update the status as allowable in secure memory of the service card 104. The user may be able to also update the status of the mobile device 106 to disallowed. Otherwise, both devices may be active and the service care 104 may be switched between the two devices. In regards to the hardware reset process, the use may use the reset needle point press on the physical service card 104 to activate the self-train mode. In this mode, the user data may be deleted and have to be reloaded. When the service card 104 is inserted into the new host device, the provisioning process may begin as discussed above.

In some aspects of operate the content provider 504 may transmit information to the mobile host device 106 using the service card 104 is response to at least an event. The information may include, for example, service information (*e.g*., access history), scripts, applications. Web pages, and/or other information associated with the content provider 504. The event may include completing access to a service, determining a service card 104 is outside the operating range of a broadcast network 108, receiving a request from a user of the mobile host device, and/or others. For example, the content provider 504 may identify a mobile host device 106 associated with a card 104 that accessed a service and transmit service information to the service card 104 using the broadcast or cellular core network 108. In addition or alternatively, the content provider 504 may request information from the mobile host device 106, the service card 104 and/or the user using the broadcast of cellular core network 108. For example, the content provider 504 may transit a request to update the Electronic Service Guide to the card 104 though the broadcast or cellular core network 108.

FIGURE 6 is a block diagram illustrating an example service card 104 in accordance with some implementations of the present disclosure. In general, the service card 104 may independently receive broadcast signals to present through the GUI 116 of the mobile host device 106. The service card 104 is for illustrating purposes only and may include some, all, or different elements without departing from the scope of the disclosure.

As illustrated, the service card 104 includes an antenna 602, an Antenna Control Funtion (ACF) module 604, a broadcast receiver 606, a set-top module 608, a CPU 610 and memory 612. The antenna 602 receives wireless broadcast signals such as satellite radio and/or TV. In some implementations, the AFC module 604 can selectively switch the antenna 602 between an active state and an inactive state in response to at least an event. A switching event may include a user selection through the GUI 116. In some implementations, the switching event may be based, at least in part, on operational aspects of the mobile host device 106 such as completion of presentation of multimedia. In addition, the ACF module 604 may dynamically adjust the impedance of the antenna 602 to tune the receive frequency The ACF module 604 may selectively switch the antenna 602 on and off in response to at least a command from die CPU 610. In some implementations, the antenna 602 can be connected through a logic gate to allow for code from the CPU 610 to turn the antenna 602 on and off through the ACF module 604.

The receiver 606 can include any software, hardware, and/or firmware configured to receive broadcast signals using the antenna 602. For example, the receiver 606 may convert broadcast signals to set top module processable signals. In some implementations, the receiver 606 may translate a broadcast protocol to a security protocol. For example, the receiver 606 may translate to ISO 7816, a stand security, protocol, and/or others. Broadcast signals may include DVB, DMB, FLO and/or MBMS. In some implementations, ISO 7816 commands may be encapsulated within interface commands used to transmit data between the mobile host device 106 and the card 104.

The set-top module 608 can include any software, hardware, and/or firmware configured to unscramble broadcast signals to a form displayable through the GUI 110. For example, the set-top module 608 may launch the CAS application to unscramble the broadcast signals determine encoded content and decrypt the encoded content to a presentable form (*e.g*, MPEG 4). In some implementations, the set-top module 608 may authenticate one or more aspects of the mobile host device, user, and/or card 104. In some implementations, the set-top module 608 may authenticate a user by verifying a physical connection with a user using user information such as user ID and password, biometric information (*e.g*., fingerprint), a PIN entered by the user, a x.509 type certificate that is unique to the user and stored on the host device 110, and/or other processes. For example, the set-top module 608 may compare user information provided through the GUI 116 with user information stored in the local memory 612. Alternatively or in addition, the set-top module 608 may authenticate the mobile host device 106 by comparing a device signature with a locally-stored certificate. In some implementations, the user can select a user-id and password or PIN or certificate at provisioning time. If this case, the CPU 610 may instantiate a software plug-in on the host device. For example, a software plug-in may request the user for his user-id and password or PIN in real time, read a user certificate installed on the device (*e.g*., x.509), and/or others the operation of the software plug-in may be customized by the provider. Regardless, the returned user data may be compared with user data stored in the memory 612. In case of a successful match, the ACF module 604 may activate the antenna 602. In cast of an unsuccessful match of a certificate and/or user information, the card 104 is deactivated. In case of unsuccessful user ID and password match, the user may be requested to repeat user-id and password attempts until a successful match or the number of attempts exceeds a threshold. The card provider may customize the attempt threshold.

In some implementations, the set-top module 608 may implement one or more Conditional Access Systems with accompanying encryption algorithms to decode broadcast signals. For example, the set-top module 608 may include or otherwise identify a one or more keys for decoding broadcast content. In some implementations, the service card 104 may execute private key (symmetric algorithms) sush as Data Encryption Standard (DES), Triple DES (TDES) and/or others or public key (asymmetric algorithms) such as RSA, elliptic curves, and/or others. For example, the service card 104 may include one or more encryption keys such as public-private keys. In connection with decoding signals, the CAS in the set-top module 608 may identify a subscription profile identifying content available to the user. For example, the CAS in the set-top module 608 may determine one or more broadcast channels available to the user and decode one of the available broadcast channels for presenting through the GUI. The set top box 608 may present the Electronic Service Guide to the user through the GUI. The Electronic Service Guide may not only present the choice of channels available to the user but may also make available a detailed listing of programming content available on each channel. The Electronic Service Guide may also interface to the Personal Video Recorder application in the card and provide options to the user to set up timers to record certain programs. The Electronic Service Guide may also be periodically updated by the service provider through the set top box.

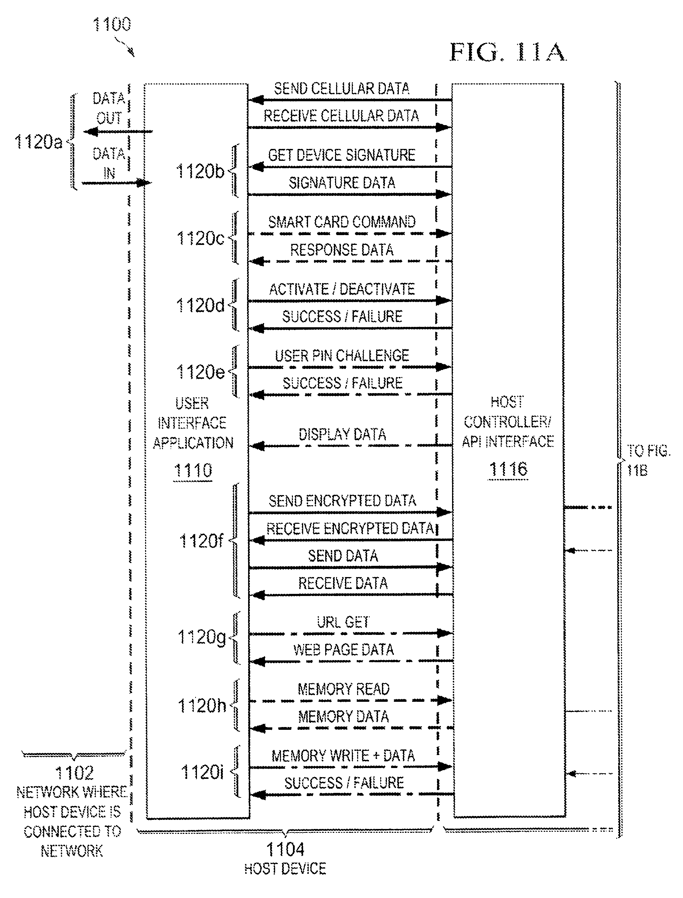

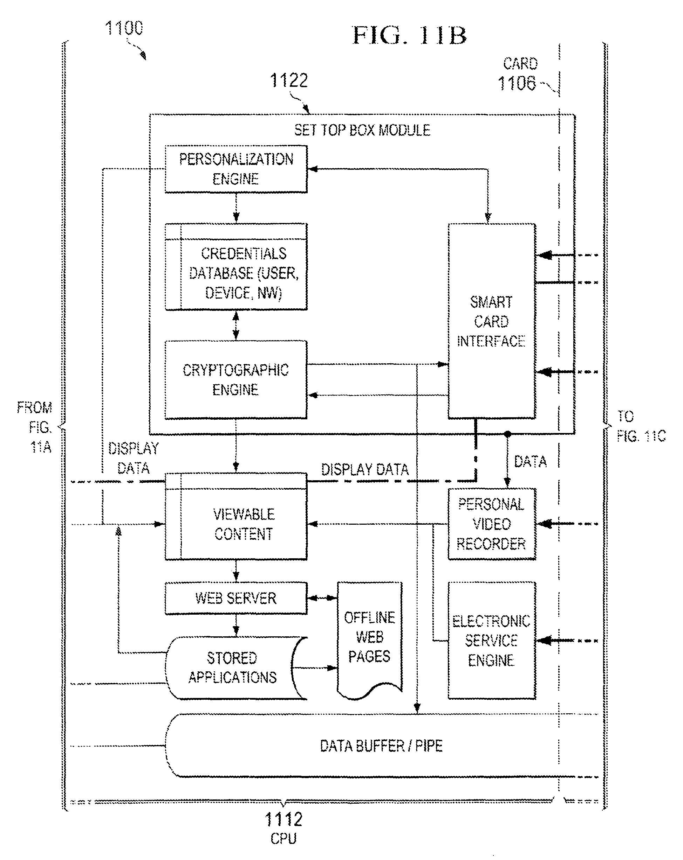

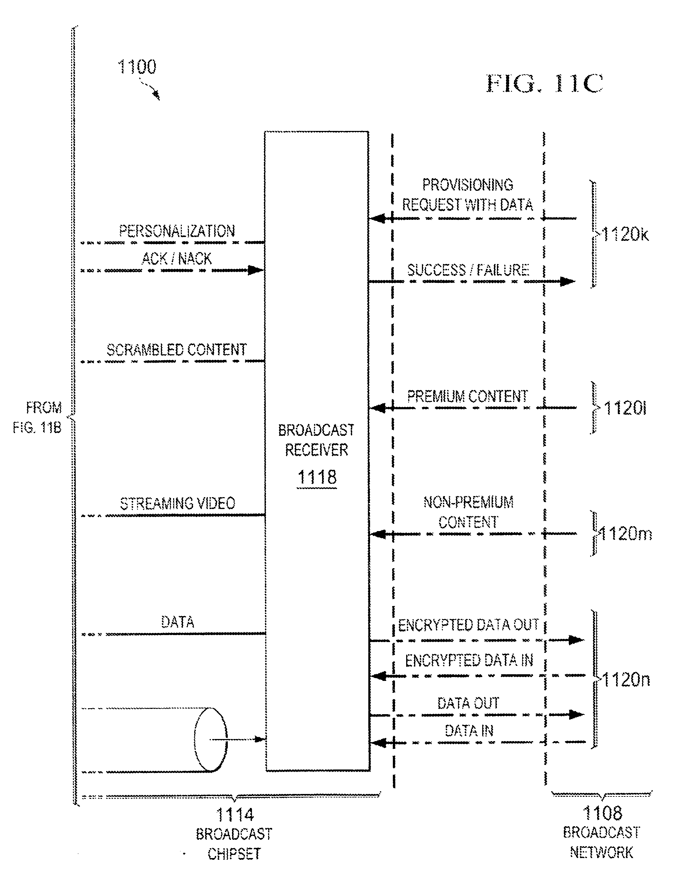

The CPU 610 can include any software, hardware, and/or firmware that manages operational aspects of the card 104 independent of the mobile host device 106. For example, the CPU 610 may include a runtime for executing broadcast applications for accessing foreign content encoded in broadcast signals. In some implementations, the CPU 610 may execute one or more of the following interfacing the mobile host device 106 such as translating between protocols; determining operational aspects of the mobile host device 106; transmitting commands to the mobile host device 106 to substantially control one or more hardware compoments (*e.g.*, GUI 116, memory); identifying events associated with activating and deactivating the antenna 602; executing broadcast applications that present foreign content from the GUI 116; executing media protocol conversion to adapt the content according to the capabilities of the media player accessible through the GUI execute the PVR application to record content on the flash memory of the card, provide access to stored content on the flash memory, manage the set top box using ISO 7816 interface mange the broadcast chipset using a high-speed IP interface, manage the memory using a standard memory controller interface; and/or others. In some implementation, the CPU 610 may transmit to the ACF module 604 switching commands in response to an event such as a user request, completion of a transaction, and/or others. In some implementations, the CPU 610 may switch the antenna 602 between active and inactivate mode using the ACF module 604 based, at least in part, on a personalization parameter defined by, for example, a user, distributor (*e.g*., content provider), and/or others. For example, the CPU 610 may activate the antenna 602 when the service card 104 is physically connected to a host device and when a handshake with the host device is sucessfully executed. In some implementations, the CPU 610 may automatically deactivate the antenna 602 when the service card 104 is removed from the host device. In regards to the handshaking process, the CPU 610 may execute one or more authentication processes prior to activating the service card 104 and/or antenna 602 as illustrated in FIGURE 11. For example, the CPU 610 may execute a physical authentication, to device authentication, and/or a user authentication. For example, the CPU 610 may activate the antenna 602 in response to at least detecting a connection to the physical interface with the host device (*e.g*., SD interface) and sucessful installation of the device driver for mass memory access (*e.g*., SD device driver) on the host device. In some implementations, device authentication may include physical authentication in addition to a signature comparison of a device signature stored in memory 612 that was created during first-use (provisioning) to a run-time signature calculated using, for example, a unique parameter of the host device 106. In the event no host device signature exists in the memory 612, the CPU 610 may bind with the first compatible host device 106 that the card 104 is inserted into. A compatible host device 106 may be a device that can successfully accomplish physical authentication successfully. If a host-device signature is present in the memory 612, the CPU 610 may compare the stored signature with the real-time signature of the current host device 106. If the signatures match, the CPU 610 may proceed to complete the bootstrap operation. If the signatures do not match, host device 106 may be rejected, bootstrap is aborted and the card 104 may be returned to the mode it was before being inserted into the device.

The memory 612 may include a secure and non-secured section. In this implementation, the secure memory 612 may store one or more user credentials that are not accessible by the user. In addition, the memory 612 may store offline Web pages, application, service history, and/or other data. In some implementations, the memory 612 may include Flash memory from 64 MB to 32GB. In addition, the memory 612 may be partitioned into user memory and device application memory. The memory 612 may store signatures of allowed host devices and/or antenna modes, In some implementations, the memory 612 may include secure portions designed to be accessible only by the content provider.

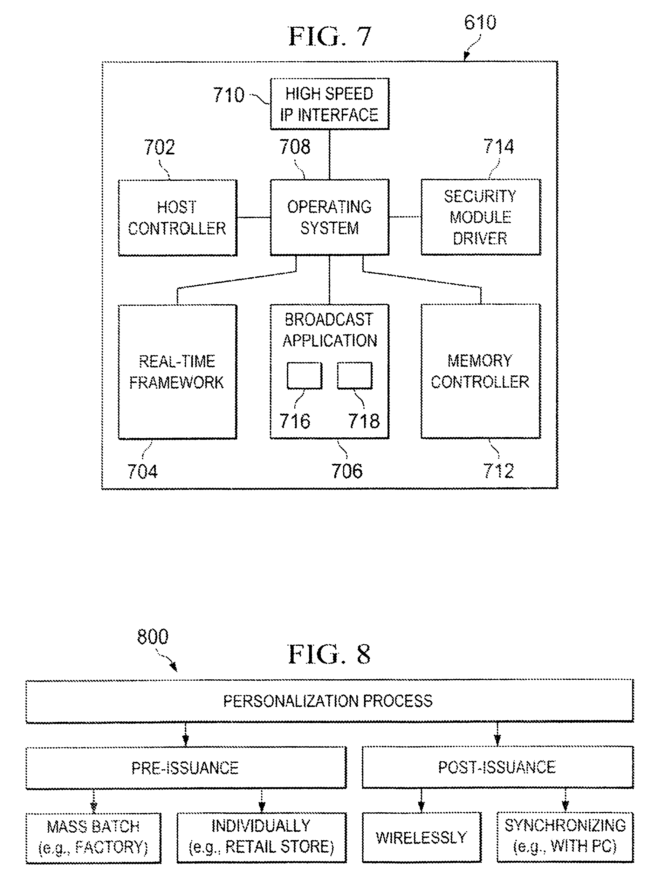

FIGURE 7 illustrates is a block diagram illustrating an example CPU 610 of FIGURE 6 in accordance with some implementations of the present disclosure. In general, the CPU 610 includes personalized modules that receive foreign content independent of the mobile device 106. The illustrated CPU 610 is for example purposes only, and the CPU 610 may include some, all or different modules without departing from the scope of this disclosure.

In some implementations, the service card 104 can include a host controller 702, a real-time framework 704, a broadcast application 706, a real-time OS 708, a high speed IP interface 710, a memory controller 712, and a security module driver 714 In some implementations, the host controller 702 includes all interface layer, an API/UI layer, a Web server, and/or other elements associated with the mobile host device 106. The host controller 702 includes interfaces to the host device, *i.e*., physical connection. In regards to the physical interface, the host controller 702 may physically interface the mobile device 106 using an SD protocol such as MicroSD, Mini-SD or SD (fall-size). In some implementations, the physical interface may include a converter/adapter to convert between two different protocols based, at least in part, on the mobile device 106. In some implementations, the mobile device 106 may communicate using protocols such as USB, MMC, Firewire, iPhone proprietary interface, and/or others. In addition, the host controller 702 may include any software, hardware, and/or firmware that operates as an API between the mobile device 106 and the service card 104. Prior to accessing services, the service card 104 may automatically install drivers in the mobile device 106 in response to at least insertion For example, the service card 104 may automatically install a microSD device driver in the device 106 to enable the service card 104 to interface the mobile device 106. In some implementations, the service card 104 may install an enhanced device driver such as a Mass Memory with Radio (MMR) API. In this implementation, the interface can drive a class of plug-ins that contain mass memory as well as a radio interface. The MMR API may execute one or more of the following: connect/disconnect to/from the MMR controller (Microcontroller in the plug-in); transfer data using MM protocol (*e.g.*, SD, MMC, XD, USB, Firewire); send encrypted dam to the MMR controller; receive Acknowledgement of Success or Error; received status word indicating description of error; turn radio an/off; send instruction to the service card 104 to turn the antenna on with specifying the mode of operation (e.g., sending mode, listening mode); transmit data such as send instruction to controller to transmit data via the radio; listen for data such as send instruction to controller to listen for data; read data such as send instruction to controller to send the data received by the listening radio; and/or others. In some implementations. MMR can be compliant with TCP/IP. In some implementations, API encapsulated ISO 7816 commands may be processed by the security module in addition to other commands.

In some implementations, host controller 702 can operate in accordance with the two processes: (I) the service card 104 as the master and the mobile device 106 as the slave; and (2) the card UI as the master. In the first process, the host controller 702 may pass one or more commands to the mobile device 106 in response to, for example, insertion of the service card 104 into a slot in the mobile device 106, a request from the GUI 116, and/or other events. In some implementations, the host controller 702 can request the mobile device 106 to execute one or more of following functions: Gel User Input; Get Signature; Display Data; Send Data; Receive Data; and/or others. The Get User input command may present a request through the GUI 116 for data from the user. In some implementations, the Get User Input may present a request for multiple data inputs. The data inputs may be any suitable format such as numeric, alphanumeric, and/or other strings of characters. The Get Signature command may request the mobile device 106 to return data such as, for example, a phone number, a device ID like an IMEI code or a MAC address, a network code, a subscription ID like the SIM card number, a connection status, location information, Wi-Fi beacons, GPS data, and/or other device specific information. The Display Data command may present a dialog to the user through the GUI 116. In some implementations, the dialog can disappear after a period of time, a user selection, and/or other event. The Send Data command may request the mobile device 106 to transmit packet data using its own connection to the external world (*e.g.*, SMS, cellular, Wi-Fi). The Receive Data command may request the while device 106 to open a connection channel with certain parameters and identify data received though the connection. In some implementations, the command can request the mobile device 106 to forward any data (*e.g.*, SMS) satisfying certain criteria to be forwarded to the service card 104.

In regards to the UI as master, the host controller 702 may execute one or more of the following commands: security module Command/Response; Activate/Deactivate; Flash Memory Read/Write; Send Data with or without encryption; Receive Data with or without decryption; URL Get Data / URL Post Data; and/or others. The security module commands may relate to security functions provided by the card and arc directed towards the security module within the service card 104 (*e.g*., standard ISO 7816 command, proprietary commands). In some implementations, the commands may include encryption, authentication, provisioning of data, creation of security domains, update of security domain, update of user credentials after verification of key, and/or others. In some implementations, the commands may include non security related smart card commands such as, for example, read service history commands. The read service guide command may perform a read of the Electronic Service Guide data stored in the memory 612 of the service card 104. In some implementations, certain flags or areas of the memory 612 may be written to after security verification. The Activate/Deactivate command may activate or deactivate certain functions of the service card 104. The Flash Memory Read/Write command may execute a read/write operation on a specified area of the memory 612. The Read command may be used by the Media Player to receive the streaming content selected by the user for viewing. The Send Data with or without encryption command may instruct the mobile device 106 to transmit data using a wireless connection. In addition, the data may be encrypted by the service card 104 prior to transmission using, for example, keys and encryption capability stored within the module 608. The Receive Data with or without decryption command may instruct the service card 104 to switch to listening mode to receive data from its wireless connection with the broadest network 108. In some implementations, data decryption can be requested by the security module using, for example, keys and decryption algorithms available on the security module, *i.e*., on-board decryption. The URL Get Data/URL Post Data command may instruct the host controller 702 to return pages as per offline get or post instructions using, for example, offline URL.s.

In some implementations, the host controller 702 may assign or otherwise associate URL style addressing to certain files stored in the memory 612 (*e.g*., flash) of the service card 104. In some implementations, the host controller 702 can locate a file using the URL and returns the file to the GUI 116 using standard HTTP, HTTPS style transfer. In some implementations, the definition of the files can he formatted using standard HTMI, XHTML, WML and/or XML style languages. The file may include links that point to additional offline storage locations in the memory 612 and/or Internet sites that the mobile device 106 may access. In some implementations, the host controller 702 may support security protocols such as SSL. The host controller 702 may transfer an application in memory 612 to the mobile device 106 for installation and execution. The host controller 702 may request the capabilities of the browser on the device 106 using, for example, the browser user agent profile, in order to customize the offline Web page according to the supported capabilities of the device and the browser, such as, for example, supported markup language, screen size, resolution, colors and such.

As part of the Real time OS, the real-time framework 704 may execute one or more functions based, at least in part, on one or more periods of time. For example, the real-time framework 704 may enable an internal clock available on the CPU 610 to provide timestamps in response to at least requested events. The real-time framework 704 may allow certain tasks to be pre-scheduled such that the tasks are executed in response to at least certain time and/or event based triggers. This aspect is used by the Real Time OS to generate triggers to launch the Personal Video Recorder application, Set top box and the broadcast chipset to begin reception and recording of the content if the user set timer for content recording has been met. In some implementations, the real-time framework 704 may allow the CPU 010 to insert delays in certain transactions. In some implementation, a pan of WAP standards called WTAI (Wireless Telephoney Application Interface) can be implemented to allow offline browser pages on the card 104 to make use of functions offered by the mobile device 106.

The broadcast application 706 can include any software hardware, and/or firmware that receive broadcast content For example, the broadcast application 706 may receive a request for content through the GUI and receive the associated broadcast signal in response to at least the request. In some implementations, the broadcast application 706 may execute one or more of the following: transmit properties of the service card 104; to the broadcast Content Distribution System; download the Electronic Service Guide data from the Broadcast Content Distrbution System; tune the antenna to the right frequency based, at least in part, on selection made by the user via the Electronic Service Guide viewed on the GUI; receive the broadcasted content based, at least in part, on the subscription information; transmit user profile and authentication data to the content distribution system, receive instructions and data to update the Electronic Service Guide, receive request from the CPU to begin or end the broadcast reception; and/or other processes. In these case, the broadcast application 710 may present media through the GUI 116 that is otherwise not accessible by the mobile host device 106, *i.e*., foreign content.

The real-time OS 708 may execute or otherwise include one or more of the following: real-time framework 704; a host process that implements the physical interface between the service-card CPU and the mobile device 106; an interface that implements the physical interface between the service-card CPU and the security module; a process that implements the ISO 7816 physical interface between the service-card CPU and the memory 612; an application-layer process that implements the API and UI capabilities; the ACP module 604; power management: and/or others. In some implementations, the real-time OS 708 may manage the physical interface between the service card CPU and the memory 612 that includes memory segmentation to allow certain memory areas to be restricted access and/or data buffers/pipes. In some implementations, the CPU 610 may include a separate memory controller 712 for managing the local memory 612. In some implementation, the real-time OS-708 may include a microcontroller OS configured to personalizing the set-top module 608 such as by, for example, converting raw data (account number, subscription information, user profile, receiver ID, CAS parameters) into secure encrypted information. In addition, the microcontroller OS may present the card 104 as a microSD mass storage to the host device 106. The microcontroller OS may partition the memory 612 into a user section and a protected device application section. In this example, the device application section may be used to store provider specific applications that either operate from this segment of the memory or are installed on the host device 106 from this segment of the memory.

The high speed IP interface 318 may provide the hardware protocol implementation and/or drivers for digital streaming content corresponding in the broadcasting signals received by the broadcast receiver. For example, the throught this high speed IP interface, the CPU mayreceive non-encrypted or non-scrambled digital streaming content associated with free or off-air or non-premium channels. In this case, this streaming content is directly made available to the media player of the host device after appropriate media protocol translation if required. For example, through this high speed IP interface, the CPU may receive encrypted or scrambled digital content associated with premium or subscription channels. In this case, the content is first sent to the set-top box for decoding and unscrambling and then forwarded to the media player after any appropriate media translation.

FIGURE 8 is a schematic diagram 800 of personalization of a intelligent card (*e.g*., the service card 104). In particular, the intelligent card may be personalized prior to being issued to a user, *i.e*., pre-issuance, or after being issued to a user, *i.e*., post-issuance. In regards to pre-issuance, intelligent cards may be personalized in mass batches at, for example, a factory. In this example, each intelligent card may be loaded with user credentials, security framework, applications, offline Web pages, and/or other data. In some implementation, a intelligent card may be personalized individually at, for example, an electronics retailer branch. In this case, a intelligent card may be individually loaded with data associated with a user after, for example, purchasing the card. As for post issuance, the intelligent card may be personalized wirelessly. For example, the service card 104 may be personalized through a cellular connection established using the mobile device 106. In some implementation, an intelligent card may be personalized by synchronizing with a computer such as client. The service card 104 may receive from an enterprise at least associated with the service GUI 110 that personalization data prior to activation including user credentials, broadcast applications, personal video recorder applications and at least one of operational flags, rule table or user interface. The personalization data present in the card may be updated after activation using at least one of the following methods: wireless or over the air messages containing special and secure update instructions; internet or client application running on a PC connected to the service card 104 via the host device or a card reader; internet application wirelessly connecting to the service card 104 via the host mobile device or user interface application of the service card 104 itself; and/or other methods.

In some implementations, provisioning of the intelligent card can be based, at least in part, on the distribution entity (*e.g*., service provider, wireless operator, user). For example, the intelligent card may be distributed by a service provider such as a content provider (for example, DirecTV). In the service provider implementation, the intelligent card can be pre-provisioned with user accounts. In this case, the intelligent card may be activated in response to at least initial insertion into a host device. The antenna mode may be set to physical authentication only by default. In some examples, the user may self-selected a user-id/password or PIN authentication to prevent unauthorized use or through a PC cradle and plug-in management software if the host device does not have a screen and keyboard. In the wireless-operator implementation, the intelligent card may require device authentication before activation. In some examples, the user may provision service data (*e.g*., subscriber profile) using one of several methods, In addition, die user may add user authentication. In the user provided implementation, the user may acquire the intelligent card from, for example, a retail store or other channels like OEM host device manufacturers. In this case, the user may activate the card in a plurality of different devices with provider selected provisioning.

In regards to activation, the intelligent card may be configured in memory mode when user acquires the card from, for example a content provider, a wireless operator, a third-party provider, and/or others. Activation of the card may include the following two levels: 1) physically, specifying antenna availability under a specific set of circonstances desired by the provider; and b) logically, at the service provider signifying activation of the broadcast application carried on the card. In some implementations, activation may be based, at least in part on device distributor, antenna availability selection, aud/or type of host device as illustrated in Table 3 below.

**Table 3:**

| **Flug-in Seller and Mode of distribution** | **Plug-In Initial State and Antenna Availability Choice** | **Device Has No Screen /Keyboard** | **Device Has Screen & keyboard** |
|---|---|---|---|
| Content provider ships plug-in directly to the subscriber or through participating resellers/distributors etc. | Plug-In is in Memory Mode. It is fully personalized with user's second information and Antenna mode is set to Physical Authentication | Manual: User has to call provider's number to activate has account. the Device can only work with a single account. User can also access content provider's site on the internet using another PC to activate his account | If the device is capable of wireless access, uport insertion, the plug-in spawas a web page and takes the user to content provider's website. The user self activates his account by entering his account number and matching secret personal information (home phone number for example). The user can also optionally select a user-id and password (change Antenna availability to user authentication) at the same time. If internet connection is not available, the device can automatically dial a voice call to content provider's number for account activation. If wireless connection is not available as well device is only a PDA), the user has to fallback to manual activation (sec left) |
| WNO; Wireless Network Operator Ships plug-in bandled with host device, User can select his preferred host device and plugin is hundled with it if user would like to avail of this service | Plug-In is in Memory Mode. It is partially personalized (device signature of the host device londed to prevent user from changing host device) while other information is not loaded. Antenna Availability is set to Device Anthentication (plug-in can only used with host device it is shipped with) | Not Applicable | Assumption; Device has a functional wireless connection. Operator offers a bundled broadcast application and subscription. When user checks the broadcast application, the use is invited to sign-up with operator's partner content provider for a new account and subscription Once sign-up is successful, account data |
| | | | is downloaded Over the Air or Over the Internet to the plugin and it is activated for use Device can use multiple content providers in this scenario and score multiple channels. User can select to enter a user ID and password for a content provider in the broadcast application in order to convert Antenna availability to user and device authentication for that content provider Plug-in is board to a device signature. When removed from the device, the Antenna turns off and the plug-in turns into a simple mass memory stick. When Plug-in is inserted into another host device, the signature doesn't match and Antenna remains off. |
| WNO; Wireless Network Operator Ships plug-in as an accessory with an advice for compatible devices. User can select has preferred host device and attempt to operate his plug-in with, to avail of the service | Plug-In is in Memory Mode, it is unpersonalized. Antenna Availability is set to Network authentication is set so On Plug-In will bind to first device it is inserted in and where network authentication is successful | Not Applicable | Assumption: Device has functional wireless connection Plug-In will spawn an internet connection to the operator normal and the broadcast application will be downloaded upon user confirmation. User can reject download and choose to manually provision content provider data by going to a third party content, provider or directly to the content provider website. Plug-In is bound to the device and to the wireless provider's network. If the name device is unlocked and used on another network, the plug-in will cease to operate and will revert back to memory mode. When removed from the device, the plug-in will revert to the memory mode. |
| OEM 1: Cellphone manufacturer | Device Authentication (device comes bundled with a cellphone) | Not Applicable | Option A: Device Manufacturer offers a broadcast application, rest of the process |
| | | | remains as above Option B: Wireless Operator offers a broadcast application. User goes to the wireless operator portal and downloads this application Over the Air. The rest of the process then remains the name as above Option C: User navigates to a third party broadcast application (example MSN-TV, Mobi-TV). Sign up is offered to participating content provider and applications are personalized on the plug-in Over the Internet Option D: User navigates to content provider's website and activates a new account which is personalized over the Internet on the plug-in |
| OEM 2: Other manufacturer | Device Authentication | User has to cradle the device to the PC with an internet connection and sign-up on the PC by going to all content provider's website directly. Account is downloaded over the internet via the cradle and then the device is activated. In this process, the plug-in is bound to the device signature. When removed from the boad device, the antenna turns off When plugged into another device, the device signature falls and the device behaves like a mass memory device only | If the device has wireless connection (it is a wirless PDA): Same as above if the device has no wireless connection (it is an unconnected PDA): Same as left |

The illustrated chart is for example purposes only. The user may activate an intelligent card using the same, some, or different processes without departing from the scope of this disclosure.

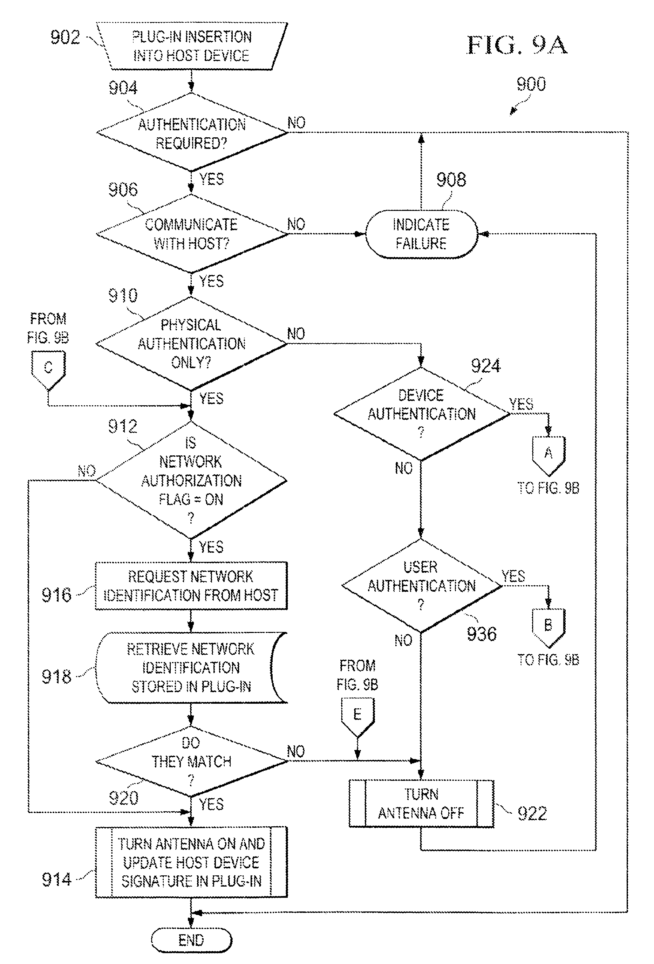

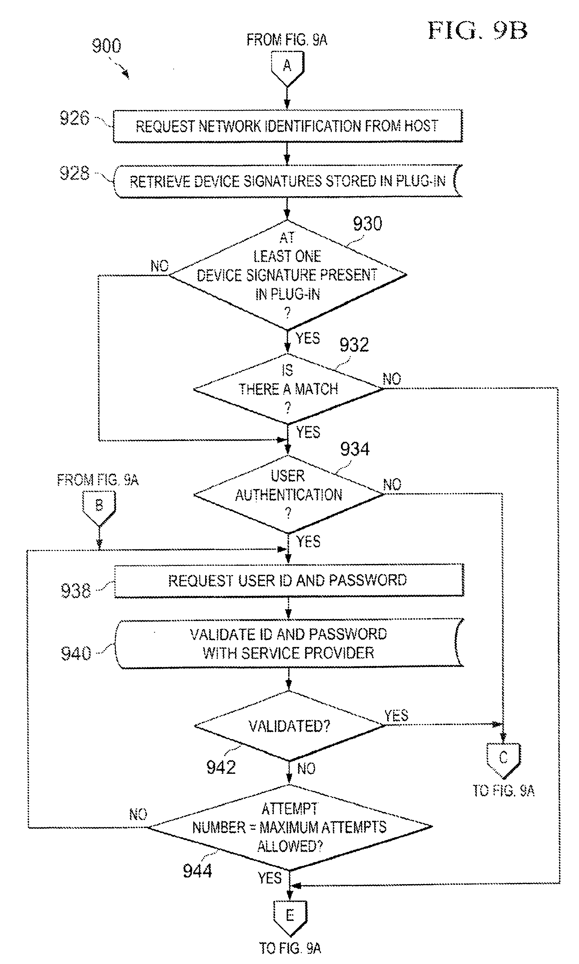

FIGURE 9 is a flow chart illustrating an example method 900 for automatically bootstrapping an intelligent card in response to at least insertion into a host device. In general, an intelligent card may execute one or more authentication procedures prior to activation. Many of the steps in this flowchart may take place simultaneously and/or in different orders as shown. System 100 may use methods with additional steps, fewer steps, and/or different steps, so long as the methods remain appropriate.

Method 900 begins at step 902 where insertion into a host device is detected. For example, the service card 104 may detect insertion into the mobile device 106. If authentication is not required for any aspect of the intelligent card at decisional step 904. then execution ends. If authentication is required for at least one aspect, then execution proceeds to decisional step 906. If communication with the host device includes one or more errors, then, at step 908, a failure is indicated to the user. In the example, the service card 104 may present an indication of a communication error to the user using the GUI 116. If a communication error is not detected at decisional step 906, then execution proceeds to decisional step 910. In some implementations, the intelligent card uploads an SD driver to the host device. If the intelligent card only requires physical authentication, then execution proceeds to decisional step 912. If the network authentication flag is not set to on, then, at step 914, the antenna is turned on and the intelligent card is updated with host-device signature. As for the example, the service card 104 may activate the antenna for wireless transactions and update local memory with the host-device signature. If the network authentication flag is turned on at decisional step 912, then, at step 916, the intelligent card transmits a request for the network ID to the host device. Next, at step 918, the intelligent card retrieves a locally-stored network ID. If the stored network ID and the request network ID match at decisional step 920, then the card is activated at step 914. If the two network ID's do not match, then the antenna is deactivated at step 922.

Returning to decisional step 910, if the authentication is not only physical authentication, then execution proceeds to decisional step 924. If the authentication process includes device authentication, then, at step 926, the intelligent card transmits a request for a network ID to the host device. At step 928, the intelligent card retrieves a locally stored device signatures. If the intelligent card does not include at least one device signature, then execution proceeds to decisional step 934. If the intelligent card include one or more device signatures, then execution proceeds to decisional step 932. If one of the device signatures matches the request network ID, then execution proceeds to decisional step 934. If the signatures and the request network ID do not match, then execution proceeds to step 922 for deactivation. If user authentication is not included in the authentication process, then execution proceeds to decisional step 912 for physical authentication. If user authentication is included at decisional step 934, then execution proceeds to step 938.

Returning to decisional step 924, if the authentication process does not include device authentication, then execution proceeds to decisional step 936. If user authentication is not included in the process, then, at step 922, the intelligent card is turned off. If user authentication is included, then, at step 938, the intelligent card request a userid and password from the user using the host device. While the user authentication is described with respect to entering a user id and password through the mobile host device, the user may be authenticated using other information such as a simple PIN and/or biometric information (e.g., fingerprint). Again returning to the example, the service card 104 may present a request for the user to enter a user-id and password through the GUI 116. At step 940, the intelligent card sends the entered information to the service provider using the cellular network or the broadcast network. If at the account information is validated by the service provider at decisional step 942, then execution proceeds to decisional step 912 for physical authentication. If the account information is not validated at decisional step 942, then execution proceeds to decisional step 944. If the number of attempts have not exceeded a specified threshold, then execution returns to step 938. If the number of attempts has exceed to the threshold, then the antenna is deactivated at step 922. In the example, if the event that the service card 104 fails to authorize the device, network and/or user, the service card 104 may wirelessly transmit an indication so the associated service provider using the cellular radio technology of the mobile host device 106. In this case, the illustrated method 900 may be implemented as a fraud control process to substantially prevent unauthorized use of the service card 104.

FIGURE 1000 is a flow chart illustrating an example method 1000 for activating a wireless transaction system including an intelligent card. In general, an intelligent card may execute one or more activation processes in response to, for example, a selection from a user. Many of the steps in this flowchart may take place simultaneously and/or in different orders as shown. System 500 may use methods with additional steps, fewer steps, and/or different steps, so long as the methods remain appropriate.

Method 1000 begins at step 1002 where a request to activate a service card is received. For the user may select a graphical element displayed through the GUI 116 of a mobile host device 106 in FIGURE 1. If an account activation is included at step 1004, then at step 1006, a request to activate the associated user account is wirelessly transmitted to service provider using broadcast radio technology of the host device. For example, the service card 104 may wireless transmit an activation request to the service GUI 116 using the cellular radio technology of the mobile host device 106. If an account activation is not included, then execution proceeds to step 1008. If card activation is not included, then execution ends. If card activation is included, then execution proceeds to decisional step 1010. If an activation code is not included, then at step 1012, one or more preprogrammed questions are presented to the user using the GUI of the host device. Returning to the initial example, the service card 104 may identity locally stored questions and present the questions to the user using the GUI 116 ot the mobile host device 106. At step 1014, locally-stored answers to the programmed questions are identified. Returning to decisional step 1010, if an activation code is included, then execution proceeds to decisional step 1016. If the activation code is manually entered by the user, then at step 1018, a request for the activation code is presented to the user through the GUI of the mobile host device. In the initial example, the service card 104 may present a request for an activation code such as a string of characters to the user throught the GUI 116 of the mobile host device 106. If the activation code is not manually entered by the user, then at step 1020, the service card wirelessly transmits a request for the activation code using the cellular radio technology of the host device. In the broadcast example, die service card 104 may transmit a request to the service provider using the cellular core network 108. In either case, the locally-stored activation code is identified at step 1022. If the locally stored information matches the provided information at decisional step 1024, then at step 1026, the service card is activated. For example, the service card 104 may activate in response to at least a user enterring a matching activation code through the GUI 116. If the provided information does not match the locally stored information, then execution ends.

FIGURES 11A-C is an example call flow 1100 in accordance with some implementations of the present disclosure. An illustrated, the flow 1100 includes a network 1102, a host device 1104, an intelligent card 1106, and a broadcast network 1108. The host device 1104 is configuration to communicate with the network 1102 and includes a slot for insertion of the intelligent card 1106. The intelligent card 1106 is configured to transmit commands to and receive data from a user interface application 1110 executed by the host device 1110 and execute access foreign services independent of the host device 1110. The card 1106 includes a CPU 1112 for accessing services and a wireless chipset 1114 for communicating with the broadcast network 1108. The CPU 1112 executes a host controller/API interface 1116 configured to transmits commands in a form compatible with the host device 1104 and convert data from the host device 1104 to a form compatible with the CPU 1112.

As the flow 1100 may include multiple sessions 1120 between the host device 1104 and the card 1106 and between the card 1106 and the broadcast network 1108. The session 1120a illustrates a session managed by the card 1106 using the network capabilities of the host device 1110. In this example, the card 1106 transmits data for transmission through a network connected to the host device 1104, and after the data, the host device 1104 trasmits the data to the network 802. In response to receiving data from the network 1102, the host device 1104 may automatically transmit the received data to the card 1106. In some implementations, the card 1106 may transmit a request for a device signature to the host device 1104 as illustrated in session 1120b. For example, the card 1106 may request the device signature during a bootstrapping process. The session 1120c illustrates that a user may submit commands to the card 1106 through the interface of the host device 1104. For example, the user may request that the card display the user's transaction history throuh the interface of the host device 1104.

In some implementations, the card 1106 may receive a command to activate or deactivate the antenna through the host device 1104 as illustrated in session 1120d. For example, a service provider may identify irregular transactions and transmit a command through the network 1102 to deactivate the card 1106. The card 1106 may authorize a user by requesting a user-id and password using the host device 1104. As illustrated in session 1120e, the user may submit a user-id and password to the card 1106 using the interface of the host device 1104, and in response to an evaluation of the submitted user-id and password, the card 1106 may present through the host device 1104 an indication that the user verification is successful or has failed. In some implementations, a user and/or service provider may request a transaction history or the card 1106 as illustrated in session 1120f. For example, a service provider may transmit a request for the transaction history through the network 1102 connected to the host device 1104, and in response to at least in the request, the card 1106 may transmit the transaction history to the service provider using the network 1102 connected to the host device 1104. In some implementations, the user may present offline Web pages stored in the card 1106 as illustrated in session 1120. For example, the card 1106 may receive a request to present an offline Web page from the user using the host device 1104 and present the offline page using the URL in the request. In some implementations, content data stored in the memory of the card 1106 or available via live reception of streaming content may be presented through, for example, the host device 1104 as illustrated in session 1120h. For example, the user may request specific information associated with the Electronic Service Guide and the card 1106 may retrieve the data and present the data to the user using the host device 1104. In addition, the user may write data to the memory in the card 1106 as illustrated in session 1120i. For example, the user may setup timers for the Personal Video Recorder appication on the card 1106 and the card 1106 may indicate the success and failure of the timer setup

In regards to session between the card 1106 and the terminal, the flow 1100 illustrates the personalization session 1120k and the transaction session 1120l. In regards to personalization, a service provider may personalize a card 1106 with user credentials, user application, Web page, and/or other information as illustrated in session 1120k. For example, the broadcast network 1108 may transmit a provisioning request to the card 1106 including associated data. The protocol translation 1118 may translate the personalization request to a form compatible with the card 1106. In response to at least the request, the CPU 1112 transmit an indication whether the personalization was a success or not using the protocol translation 1118. Prior to the a broadcast session beginning live reception, the broadcast network 1108 may submit a subscription verification challenge to the card 1106 as illustrated in session 1120l. In this case, the card 1106 may identify a receiver signature of the receiver 1118, present associated data to the user through the host device 1104, and transmit the signature to the broadcast network 1108 using the protocol translation 1118.

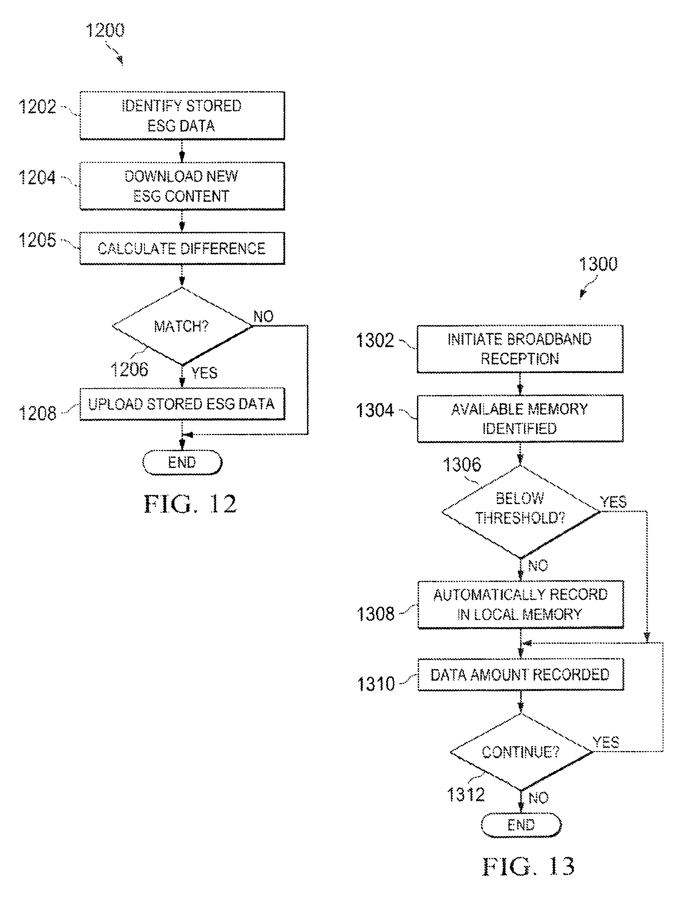

FIGURE 12 is a flow chart illustrating an example method 1200 for managing the Electronic Service Guide application. In general, an intelligent card may receive ESG data from the broadcast network and display it to the user in response to at least an event. Many of the steps in this flowchart may take place simultaneously ando/or in different orders as shown.

Method 1200 begins at step 1202 where ESG data currently stored is identified. For example, the service card 104 may receive ESG data from the broadcast network or the cellular network such as channel lineup, program listing, program information and program, ratings. At step 1204, previously downloaded ESG content is identified. In the example, the service card 104 may identify content previously downloaded from the content provider to the local memory in the card 104. In some implementations, the service card 104 may identify one or more aspects of memory such as file names, file sizes, dates, and/or other aspects. It the previously-downloaded content matches the current content at decisional step 1206, then execution ends. If the previously-dowloaded content does not match the current content, then, at step 1208, at least a portion of the locally-stored content is automatically updated in the local memory. As for the example, the service card 104 may only download content identified as new content or content that was previously not downloaded. In downloading the content, the service card 104 may substantially updates local-stored ESG content according to the latest available ESG from the service provider

FIGURE 13 is a flow chart illustrating an example method 1300 for managing the Personal Video Recorder application. In general, an intelligent card may automatically receive data from the broadeast network and record it to the memory (if space is available) in response to at least an event (timer). Many of the steps in this flowchart may take place simultaneously and/or in different orders as shown.

Method 1300 begins at Step 1302 where a timer event triggers the beginning of broadcast reception. For example, the service card 104 may automatically tune the antenna to the channel corresponding to the program that the user has setup to record as associated with the timer. At step 1304, available memory space is identified. In the example, the service card 104 may identify free local memory in the card 104. If the available memory is below a certain threshold (configured by the service provider) at decisional step 1306, then execution ends. If available memory is above a certain threshold, then, at step 1308, broadcast reception is started and content is automatically recorded in the local memory in a newly created program data file. After a specified size of program data is recorded, available memory is checked again and the process is repeated by appending to the program data file until either the program ends or the available memory falls below the threshold. Once the program ends, the program data file is finalized and given a unique identifier so that it can be accessed for viewing.

## Claims

1. A cover (102) for a consumer device, comprising:
side surfaces configured to be adjacent at least a portion one or more side surfaces of the consumer device (106);
a rear surface configured to be adjacent at least a portion of a rear surface of the consumer device (106) and connected to the side surfaces, the side surfaces and the rear surface form an opening that receives at least a portion of the consumer device (106), a first portion of at least one of the surfaces includes a connector (112) for connecting to a port of the consumer device;
a physical interface (110) included in at least one of the surfaces configured to receive memory devices (104) external to the consumer device (106);
**characterized in that** the cover further includes
a circuit (114) integrated within at least one of the surfaces and configured to connect the physical interface (110) to the connector (112); and
a broadcast service card connected to the physical interface and configured to receive broadcast content independent of the consumer device, wherein
the broadcast service card comprises:
- a communication module configured to wirelessly receive broadcast signals encoding content;
- memory configured to store user information used to decrypt the encoded content independent of the mobile host device, the stored information associated with a content provider; and
- a service module configured to decrypt the encoded content in response to at least an event and presents the content through the GUI (116) of the mobile host device.

2. The cover of claim 1, wherein the physical interface (110) that receives an external memory device (104) comprises a microSecureDigital slot.

3. The cover of claim 1, the circuit further comprising a conversion module (202) configured to convert signals between a form compatible with the broadcast service card and a form compatible with the consumer device (106), optionally
wherein the conversion module converts between a SD signal and a Universal Serial Bus signal.

4. The cover of claim 1, the consumer device comprising an iPhone, the connector comprising an iDock connector.

5. The cover of claim 1, wherein one or more of the side surfaces are substantially arcuate to substantially maintain a shape and dimensions of the consumer device.

6. The cover of claim 1, the broadcast signals comprise at least one of satellite broadcast signals, terrestrial broadcast signals, or IP broadcast signals.

7. The cover of claim 1, wherein the service module comprises an operating system with a runtime environment configured to execute a locally-stored broadcast application for receiving the content independent of the mobile host device.

8. The cover of claim 1, further comprising a user-interface module configured to present information associated with receiving the content through the GUI (116) of the mobile host device, optionally
wherein the user-interface module further configured to present a request for user identification including at least one of a Personal Identification Number, user ID and password, or biometric signature through the GUI (116) of the mobile host device, the service module further verifies the submitted user identification with user identification locally stored in the secure memory prior to accessing foreign services.

9. The cover of claim 1, wherein the service module further configured to selectively switch a broadcast receiver between an activate state and an inactivate state in response to at least an event, optionally wherein the switching event includes a selection through a GUI (116) of the mobile host device.

10. The cover of claim 1, further comprising an authentication module configured to authenticate at least one of a network of the mobile host device, the mobile host device, or a user.

11. The cover of claim 1, further comprising an activation module configure to activate the service card in response to at least a user request or an initial insertion into the mobile host device, optionally
wherein the service card is activated based, at least in part, on a user manually entering an activation code through the GUI (116) of the mobile host device.

12. The cover of claim 1, wherein the service card presents the content through the GUI (116) independent of loading a driver onto the mobile host device; or
wherein the service card emulates a set-top box when receiving broadcast signals.

13. The cover of claim 1, further comprising a power module configured to receive power from the mobile host device.

14. The cover of claim 1, wherein an enterprise at least associated with the content provider uploads personalization data prior to activation, wherein the personalization data includes the user information and a broadcast application, the service module optionally further operable to update the personalization data after activation in response to at least one of a wireless signal including secure update instructions or a wired signal through a client connected to the service card.

## Patentansprüche

1. Abdeckung (102) für eine Endverbrauchervorrichtung umfassend:
Seitenoberflächen, die ausgelegt sind, um an mindestens einen Bereich einer oder mehrerer Seitenoberflächen der Endverbrauchervorrichtung (106) anzugrenzen;
eine rückseitige Oberfläche, die ausgelegt ist, um an mindestens einen Teil der rückseiteigen Oberfläche der Endverbrauchervorrichtung (106) anzugrenzen, wobei die Seitenoberflächen und die rückseitige Oberfläche eine Öffnung bilden, die mindestens einen Teil der Endverbrauchervorrichtung (106) aufnimmt, wobei mindestens ein erster Bereich der Oberflächen eine Verbindung (112) beinhaltet zur Verbindung an einen Anschluss der Endverbrauchervorrichtung;
eine physikalische Schnittstelle (110), die in mindestens einer der Oberflächen beinhaltet ist, ausgelegt, um Speichervorrichtungen (104) aufzunehmen, die extern von der Endverbrauchervorrichtung (106) sind;
**dadurch gekennzeichnet, dass** die Abdeckung weiter beinhaltet eine Schaltung (114), die in zumindest eine der Oberflächen integriert ist und ausgelegt ist, um die physikalische Schnittstelle (110) mit dem Verbinder (112) zu verbinden; und
eine Ausstrahlungsdienstkarte, die mit der physikalischen Schnittstelle verbunden ist und ausgelegt, um Ausstrahlungsinhalt unabhängig von der Endverbrauchervorrichtung zu empfangen, wobei die Ausstrahlungsdienstkarte umfasst:
- ein Kommunikationsmodul, ausgelegt, um drahtlos Ausstrahlungssignale zu empfangen, die Inhalt verschlüsseln;
- Speicher, ausgelegt, um Benutzerinformationen zu speichern, um den verschlüsselten Inhalt unabhängig von der mobilen Hostvorrichtung zu entschlüsseln, wobei die gespeicherten Informationen mit einem Inhaltsanbieter verbunden sind; und,
- ein Service-Modul, ausgelegt, um den verschlüsselten Inhalt zu entschlüsseln in Antwort auf mindestens ein Ereignis und, das den Inhalt über das GUI (116) der mobilen Hostvorrichtung darstellt.

2. Abdeckung nach Anspruch 1, wobei die physikalische Schnittstelle (110), die eine externe Speichervorrichtung aufnimmt, einen microSecureDigital-Einschub umfasst.

3. Abdeckung nach Anspruch 1, wobei die Schaltung weiter ein Konversionsmodul (202) umfasst, ausgelegt, um Signale zwischen einer Form, die kompatibel mit der Ausstrahlungsdienstkarte ist und einer Form, die kompatible mit der Endverbrauchervorrichtung (106) ist zu konvertieren, optional wobei das Konversionsmodul zwischen einem SD-Signal und einem Universal Serial Bus-Signal konvertiert.

4. Abdeckung nach Anspruch 1, wobei die Endverbrauchervorrichtung ein iPhone umfasst, der Verbinder einen iDock-Verbinder umfasst.

5. Abdeckung nach Anspruch 1, wobei eine oder mehrere der Seitenoberflächen im Wesentlichen gebogen sind, um im Wesentlichen eine Form und Abmessungen der Endverbrauchervorrichtung (106) beizubehalten.

6. Abdeckung nach Anspruch 1, wobei die Ausstrahlungssignale mindestens eines aus Satelliten-Ausstrahlungssignalen, terrestrischen Ausstrahlungssignalen oder IP Ausstrahlungssignalen umfassen.

7. Abdeckung nach Anspruch 1, wobei das Service-Modul ein Betriebssystem mit einer Laufzeitumgebung umfasst, ausgelegt, um eine lokal gespeicherte Ausstrahlungsanwendung auszuführen, um den Inhalt unabhängig von der mobilen Hostvorrichtung zu empfangen.

8. Abdeckung nach Anspruch 1, weiter umfassend ein Benutzerschnittstellenmodul, ausgelegt, um Informationen, die mit dem Empfang des Inhalt über das GUI (116) mobilen Hostvorrichtung verbunden sind, darzustellen, optional
wobei das Benutzerschnittstellenmodul weiter ausgelegt ist, um eine Anfrage zur Identifikation des Benutzers darzustellen, die mindestens eines von einer persönlichen Identifikationsnummer, Benutzer-ID und Passwort oder biometrischen Signatur beinhaltet, durch das GUI (116) der mobilen Hostvorrichtung, wobei das Service-Modul weiter die eingereichte Benutzeridentifikation überprüft mit Benutzeridentifikationen, die lokal gespeichert sind in dem sicheren Speicher, bevor auf fremde Dienste zugegriffen wird.

9. Abdeckung nach Anspruch 1, wobei das Service-Modul weiter ausgelegt ist, um selektiv einen Ausstrahlungs-Empfänger zwischen einem aktiven Zustand und einem inaktiven Zustand in Antwort auf mindestens ein Ereignis umzuschalten, optional
wobei das Schaltereignis eine Auswahl durch ein GUI (116) der mobilen Hostvorrichtung beinhaltet.

10. Abdeckung nach Anspruch 1, weiter umfassend ein Authentifizierungsmodul, ausgelegt, um mindestens eines von einem Netzwerk der mobilen Hostvorrichtung, die mobile Host-Vorrichtung oder einem Benutzer zu authentifizieren.

11. Abdeckung nach Anspruch 1, weiter umfassend ein Aktivierungsmodul, ausgelegt, um die Dienstkarte zu aktiviere in Antwort auf zumindest eine Benutzeranfrage oder ein anfängliches Einfügen in die mobile Hostvorrichtung, optional
wobei die Dienstkarte aktiviert wird, zumindest teilweise basierend auf einen Benutzer, der manuell einen Aktivierungscode durch die GUI (116) der mobilen Hostvorrichtung eingibt.

12. Abdeckung nach Anspruch 1, wobei die Servicekarte den Inhalt durch die GUI (116) darstellt, unabhängig vom Laden eines Treibers auf die mobile Hostvorrichtung; oder
wobei die Servicekarte eine Set-Top-Box emuliert, wenn Ausstrahlungssignale empfangen werden.

13. Abdeckung nach Anspruch 1, weiter umfassend ein Energiemodul, ausgelegt, um Energie von der mobilen Hostvorrichtung zu empfangen.

14. Abdeckung nach Anspruch 1, wobei ein Unternehmen, das zumindest mit dem Inhaltsanbieter verbunden ist, Personalisierungsdaten vor der Aktivierung hochlädt, wobei die Personalisierungsdaten die Benutzerinformationen und eine Ausstrahlungsanwendung beinhalten, das Service-Modul optional weiter funktionsfähig ist, um die Personalisierungsdaten nach Aktivierung zu aktualisieren in Antwort auf mindestens eines von einem drahtlosen Signal, das Sicherheitsaktualisierungsinstruktionen beinhaltet oder einem drahtgebundenen Signal durch einen Client, der an die Servicekarte angeschlossen ist.

## Revendications

1. Cache (102) pour un dispositif grand public, comprenant :
des surfaces latérales configurées pour être placées à côté d'au moins une partie d'une ou plusieurs surfaces latérales du dispositif grand public (106) ;
une surface arrière configurée pour être placée à côté d'au moins une partie d'une surface arrière du dispositif grand public (106) et reliée aux surfaces latérales, les surfaces latérales et la surface arrière formant une ouverture qui reçoit au moins une partie du dispositif grand public (106), une première partie d'au moins une des surfaces comprenant un connecteur (112) à connecter à une borne du dispositif grand public ;
une interface physique (110) comprise dans au moins une des surfaces configurée pour recevoir des dispositifs de mémoire (104) situés à l'extérieur du dispositif grand public (106) ;
**caractérisé en ce que** le cache comprend en outre :
un circuit (114) intégré à l'intérieur d'au moins une des surfaces et configuré pour connecter l'interface physique (110) au connecteur (112) ; et
une carte de service de radiodiffusion reliée à l'interface physique et configurée pour recevoir un contenu de radiodiffusion indépendant du dispositif grand public, dans lequel la carte de service de radiodiffusion comprend :
- un module de communication configuré pour recevoir sans fil les signaux de radiodiffusion codant le contenu ;
- une mémoire configurée pour mémoriser les informations sur l'utilisateur utilisées pour décrypter le contenu codé indépendant du dispositif d'hébergement mobile, les informations mémorisées étant associées à un fournisseur de contenu ; et
- un module de service configuré pour décrypter le contenu codé en réponse à au moins un événement et présentant le contenu à travers l'interface graphique utilisateur GUI (116) du dispositif d'hébergement mobile.

2. Cache selon la revendication 1, dans lequel l'interface physique (110) qui reçoit un dispositif de mémoire externe (104) comprend une fente micro-SD.

3. Cache selon la revendication 1, le circuit comprenant en outre un module de conversion (202) configuré pour convertir les signaux entre une forme compatible avec la carte de service de radiodiffusion et une forme compatible avec le dispositif grand public (106), en option
le module de conversion effectuant une conversion entre un signal SD et un signal USB.

4. Cache selon la revendication 1, le dispositif grand public comprenant un iPhone, le connecteur comprenant un connecteur de type iDock.

5. Cache selon la revendication 1, dans lequel une surface latérale ou plus est sensiblement arquée pour conserver sensiblement la forme et les dimensions du dispositif grand public.

6. Cache selon la revendication 1, les signaux de radiodiffusion comprenant au moins un élément parmi les signaux de radiodiffusion par satellites, les signaux de radiodiffusion terrestre ou les signaux de radiodiffusion IP.

7. Cache selon la revendication 1, dans lequel le module de service comprend un système d'exploitation avec un environnement d'exécution configuré pour exécuter une application de radiodiffusion mémorisée localement pour recevoir un contenu indépendant du dispositif d'hébergement mobile.

8. Cache selon la revendication 1, comprenant en outre un module d'interface d'utilisateur configuré pour présenter des informations associées à la réception du contenu à travers l'interface graphique utilisateur GUI (116) du dispositif d'hébergement mobile, en option
le module d'interface d'utilisateur étant en outre configuré pour présenter une demande d'identification de l'utilisateur comprenant au moins un élément parmi un code PIN, un identifiant d'utilisateur et un mot de passe ou bien une signature biométrique à travers l'interface graphique utilisateur GUI (116) du dispositif d'hébergement mobile, le module de service vérifiant en outre l'identification de l'utilisateur soumise avec l'identification de l'utilisateur mémorisée localement dans la mémoire sécurisée avant d'accéder aux services externes.

9. Cache selon la revendication 1, dans lequel le module de service est en outre configuré pour au choix commuter un récepteur de radiodiffusion entre un état activé et un état désactivé en réponse à au moins un événement, en option
l'événement de commutation comprenant une sélection à travers une interface graphique utilisateur GUI (116) du dispositif d'hébergement mobile.

10. Cache selon la revendication 1, comprenant en outre un module d'authentification configuré pour authentifier au moins un élément parmi un réseau du dispositif d'hébergement mobile, le dispositif d'hébergement mobile ou un utilisateur.

11. Cache selon la revendication 1, comprenant en outre un module d'activation configuré pour activer la carte de service en réponse à au moins une demande d'utilisateur ou à une insertion initiale dans le dispositif d'hébergement mobile, en option
la carte de service étant activée sur la base, au moins en partie, d'un utilisateur entrant manuellement un code d'activation à travers l'interface graphique utilisateur GUI (116) du dispositif d'hébergement mobile.

12. Cache selon la revendication 1, dans lequel la carte de service présente le contenu à travers l'interface graphique utilisateur GUI (116) indépendamment du chargement d'un périphérique sur le dispositif d'hébergement mobile ; ou
la carte de service émule un boîtier décodeur à réception des signaux de radiodiffusion.

13. Cache selon la revendication 1, comprenant en outre un module d'alimentation configuré pour recevoir du courant provenant du dispositif d'hébergement mobile.

14. Cache selon la revendication 1, dans lequel une entreprise au moins associée au fournisseur de contenu télécharge des données personnalisées avant l'activation, les données personnalisées comprenant les informations sur l'utilisateur et une application de radiodiffusion, le module de service pouvant en outre être utilisé en option pour mettre à jour les données personnalisées après l'activation en réponse à au moins un élément parmi un signal sans fil comprenant des instructions de mise à jour sécurisées ou un signal câblé à travers un client connecté à la carte de service.
